# FASCICULE DE BREVET EUROPEEN

(11) **EP 4 056 034 B1**
(45) Date de publication et mention de la délivrance du brevet: **12.06.2024**
(21) Numéro de dépôt: 22160559.5
(22) Date de dépôt: 07.03.2022
(51) Int. Cl.: A01M 7/00, A01C 23/04

(54) **SYSTEME DE PULVERISATION POUR ENGIN AGRICOLE COMPRENANT UNE PREMIERE ET UNE DEUXIEME CUVES PRINCIPALES**
SPRITZSYSTEM FÜR EINE LANDWIRTSCHAFTLICHE MASCHINE MIT EINEM ERSTEN UND EINEM ZWEITEN HAUPTTANK
SPRAYING SYSTEM FOR AGRICULTURAL MACHINE COMPRISING A FIRST AND A SECOND MAIN TANKS

(30) Priorité: 12.03.2021 FR 2102446
(43) Date de publication de la demande: 14.09.2022
(73) Titulaire: Exel Industries, 51200 Epernay (FR)
(72) Inventeur: PITAUD, Sylvain, 75009 PARIS (FR); CHARCOSSET, Philippe, 75009 PARIS (FR)
(74) Mandataire: Argyma

(56) Documents cités:
- EP-A1- 1 378 293
- EP-A1- 1 985 178
- EP-A1- 2 084 964
- EP-B1- 0 403 859

## Description

### DOMAINE TECHNIQUE

L'invention concerne un système de pulvérisation pour engin agricole, un sous-système de pulvérisation pour un tel système de pulvérisation, ainsi qu'un engin agricole comprenant un tel système de pulvérisation.

### ÉTAT DE LA TECHNIQUE ANTÉRIEURE

Il existe de manière connue des systèmes de pulvérisation pour engin agricole comprenant une rampe de pulvérisation et un circuit de liquide comprenant lui-même deux cuves principales remplies de liquide de traitement et des buses de pulvérisation montées sur la rampe de pulvérisation et alimentées en liquide de traitement pour le pulvériser sur des végétaux à traiter d'un champ. Ces deux cuves principales sont en outre reliées l'une à l'autre par des lignes de transfert permettant d'assurer le transfert de liquide de traitement de l'une à l'autre des deux cuves principales, dans les deux sens.

De tels systèmes de pulvérisation, comme décrits par exemple dans la demande EP2084964A1, ont toutefois connus peu d'évolutions et/ou peu d'améliorations depuis le début de leur mise en oeuvre.

Il existe donc un besoin de faire évoluer et/ou d'améliorer de tels systèmes de pulvérisation.

### EXPOSÉ DE L'INVENTION

A cet effet, la présente invention a pour objet un système de pulvérisation pour engin agricole, comprenant une rampe de pulvérisation et un circuit de liquide comprenant lui-même :
- une première cuve principale destinée à contenir un liquide de traitement,
- un premier ensemble de pompage comprenant une première pompe comprenant une entrée et une sortie, la première pompe étant conçue pour aspirer du liquide par ladite entrée et pour refouler le liquide aspiré par ladite sortie,
- au moins une première ligne d'aspiration reliée, en aval, à l'entrée de la première pompe, la ou l'une des premières lignes d'aspiration, dite première ligne d'aspiration de cuve principale, reliant la première cuve principale à l'entrée de la première pompe,
- au moins une première ligne de refoulement reliée, en amont, à la sortie de la première pompe, la ou l'une au moins des premières lignes de refoulement, dite ligne de pulvérisation, comprenant des buses de pulvérisation montées sur la rampe de pulvérisation et conçues pour pulvériser du liquide sur des végétaux à traiter,
- une deuxième cuve principale destinée à contenir un liquide de traitement,
- une ligne de transfert reliant la première cuve principale et la deuxième cuve principale l'une à l'autre et comprenant un mécanisme de pompage conçu pour aspirer du liquide de traitement provenant de la deuxième cuve principale et pour refouler le liquide de traitement aspiré vers la première cuve principale, la ligne de transfert comprenant en outre une première vanne installée en aval du mécanisme de pompage et conçue pour :
   * dans une première position, mettre en communication le mécanisme de pompage avec la première cuve principale, de manière à alimenter la première pompe et la ou les lignes de pulvérisation de liquide de traitement provenant des première et deuxième cuves principales, via la première cuve principale, et
   * dans une deuxième position, mettre en communication le mécanisme de pompage avec l'entrée de la première pompe, en contournant la première cuve principale, de manière à alimenter sélectivement la première pompe et la ou les lignes de pulvérisation de liquide de traitement provenant de la première cuve principale ou de liquide de traitement provenant de la deuxième cuve principale.

Selon des variantes de réalisation qui peuvent être prises ensemble ou séparément :
- l'une des premières lignes de refoulement, dite ligne d'incorporation, relie la sortie de la première pompe à la première cuve principale et comprend un ensemble d'incorporation conçu pour incorporer un produit à incorporer au liquide refoulé par la première pompe et circulant le long de ladite ligne d'incorporation, ainsi qu'une deuxième vanne conçue pour :
   * dans une première position, mettre en communication la sortie de la première pompe, via l'ensemble d'incorporation, avec la première cuve principale, et
   * dans une deuxième position, mettre en communication la sortie de la première pompe, via l'ensemble d'incorporation, avec la ligne de transfert, entre le mécanisme de pompage et la première vanne ;
- le mécanisme de pompage comprend un dispositif à effet Venturi conçu pour aspirer du liquide de traitement de la deuxième cuve principale et pour refouler ledit liquide de traitement vers la première vanne au moyen d'un injecteur ;
- le circuit de liquide comprend un deuxième ensemble de pompage comprenant une deuxième pompe comprenant elle-même une entrée et une sortie, la deuxième pompe étant conçue pour aspirer du liquide par ladite entrée et pour refouler le liquide aspiré par ladite sortie ;
- le circuit de liquide comprend au moins une deuxième ligne d'aspiration reliée, en aval, à l'entrée de la deuxième pompe, la ou l'une des deuxièmes lignes d'aspiration, dite deuxième ligne d'aspiration de cuve principale, reliant la deuxième cuve principale à l'entrée de la deuxième pompe ;
- le circuit de liquide comprend au moins une deuxième ligne de refoulement reliée, en amont, à la sortie de la deuxième pompe ;
- la ou l'une des deuxièmes lignes de refoulement, dite ligne d'injection, relie la sortie de la deuxième pompe à l'injecteur du dispositif à effet Venturi du mécanisme de pompage, de manière à provoquer, le long de la ligne de transfert, une aspiration et un refoulement par le dispositif à effet Venturi de liquide de traitement provenant de la deuxième cuve principale vers la première vanne ;
- le premier ensemble de pompage est conçu pour sélectivement mettre en communication la ou l'une des premières lignes d'aspiration ou la ligne de transfert, via la première vanne, avec l'entrée de la première pompe et/ou pour sélectivement mettre en communication la sortie de la première pompe avec l'une des ou des premières lignes de refoulement ;
- le deuxième ensemble de pompage est conçu pour sélectivement mettre en communication l'une des deuxièmes lignes d'aspiration avec l'entrée de la deuxième pompe et/ou pour sélectivement mettre en communication la sortie de la deuxième pompe avec l'une des ou des deuxièmes lignes de refoulement ;
- le système de pulvérisation comprend une unité de commande électronique ;
- la première cuve principale comprend un premier détecteur de niveau conçu pour détecter un niveau de liquide dans la première cuve principale ;
- la deuxième cuve principale comprend un deuxième détecteur niveau conçu pour détecter un niveau de liquide dans la deuxième cuve principale ;
- l'unité de commande est conçue pour commander le mécanisme de pompage d'aspirer et de refouler, le long de la ligne de transfert, du liquide de traitement provenant de la deuxième cuve principale vers la première cuve principale, lorsque la première vanne occupe sa première position et qu'une différence entre le niveau de liquide détecté par le deuxième détecteur de niveau et le niveau de liquide détecté par le premier détecteur de niveau est supérieure à une différence seuil prédéterminée ;
- le système de pulvérisation s'étend suivant une direction longitudinale orientée d'arrière en avant dans un sens d'avancement dudit système de pulvérisation ;
- la première cuve principale est agencée à l'arrière du système de pulvérisation, tandis que la deuxième cuve principale est agencée à l'avant du système de pulvérisation ;
- la première cuve principale, le premier ensemble de pompage, la ou les premières lignes d'aspiration et la ou les premières lignes de refoulement forment un premier sous-système de pulvérisation ;
- la deuxième cuve principale et le mécanisme de pompage forment un deuxième sous-système de pulvérisation ;
- la ligne de transfert est en outre formée d'au moins deux tronçons de transfert conçus pour se connecter et se déconnecter entre eux de manière réversible, l'un des tronçons de transfert, dit premier tronçon de transfert, faisant partie du premier sous-système de pulvérisation et comprenant la première vanne, l'autre ou un autre des tronçons de transfert, dit deuxième tronçon de transfert, faisant partie du deuxième sous-système de pulvérisation et comprenant le mécanisme de pompage ;
- le système de pulvérisation comprend une autre rampe de pulvérisation et une autre ligne de transfert reliant la première cuve principale et la deuxième cuve principale ;
- l'une au moins des deuxièmes lignes de refoulement, dite autre ligne de pulvérisation, comprend des autres buses de pulvérisation montées sur l'autre rampe de pulvérisation et conçues pour pulvériser du liquide sur des végétaux à traiter ;
- l'autre ligne de transfert comprend un autre mécanisme de pompage conçu pour aspirer du liquide de traitement provenant de la première cuve principale et pour refouler le liquide de traitement aspiré vers la deuxième cuve principale ;
- l'autre ligne de transfert comprend une autre première vanne agencée en aval de l'autre mécanisme de pompage, l'autre première vanne étant conçue pour :
   * dans une première position, mettre en communication l'autre mécanisme de pompage avec la deuxième cuve principale, et
   * dans une deuxième position, mettre en communication l'autre mécanisme de pompage avec l'entrée de la deuxième pompe, en contournant la deuxième cuve principale, de manière à alimenter sélectivement la deuxième pompe et la ou les autres lignes de pulvérisation de liquide de traitement provenant de la deuxième cuve principale ou de liquide de traitement provenant de la première cuve principale.

L'invention concerne aussi un sous-système de pulvérisation pour système de pulvérisation tel que précédemment décrit, ledit sous-système de pulvérisation formant le premier sous-système de pulvérisation, le premier tronçon étant apte à se connecter de manière réversible au deuxième tronçon du deuxième sous-système.

L'invention concerne encore un engin agricole comprenant un système de pulvérisation tel que précédemment décrit.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
[Fig.1] est une vue schématique d'un système de pulvérisation pour engin agricole selon un mode de réalisation de l'invention ;
[Fig.2] est une vue schématique d'un système de pulvérisation pour engin agricole selon un autre mode de réalisation de l'invention.

### DESCRIPTION DETAILLEE

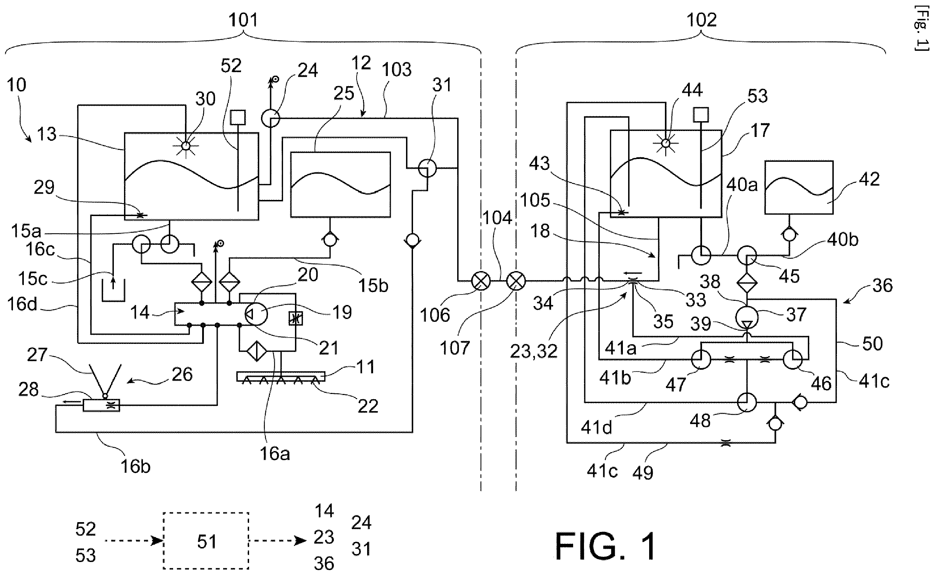

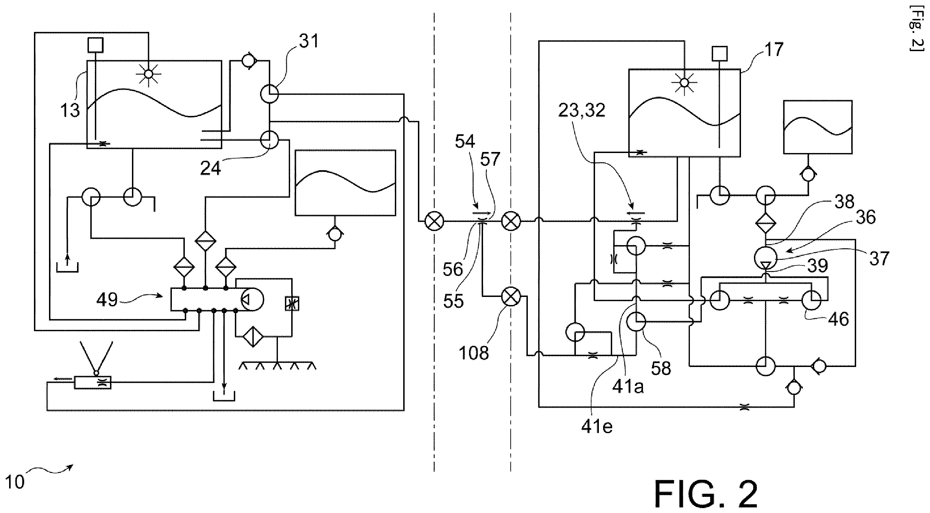

Les figures 1 et 2 montrent un système de pulvérisation 10 pour engin agricole, notamment destiné à pulvériser un liquide de traitement dans un champ de végétaux à traiter, par exemple de grandes cultures, telles que la culture de céréales, selon différents modes de réalisation de l'invention.

Le système de pulvérisation 10 est en contact avec un sol, notamment du champ de végétaux à traiter, par exemple par l'intermédiaire de roues (non représentées) permettant son déplacement.

Le système de pulvérisation 10 est par exemple destiné à être porté par l'engin agricole, tel qu'un tracteur.

Il est adopté à titre non limitatif un repère orthogonal comprenant une direction longitudinale vers l'avant dans le sens d'avancement de l'engin agricole, une direction transversale vers la gauche et une direction verticale vers le haut. Les directions longitudinale et transversale sont horizontales, globalement parallèles au sol.

Le système de pulvérisation 10 comprend une rampe de pulvérisation 11 s'étendant par exemple suivant une direction d'extension principale horizontale, notamment globalement transversale, et un circuit de liquide 12.

Le circuit de liquide 12 comprend une première cuve principale 13 destinée à contenir un liquide de traitement, un premier ensemble de pompage 14, au moins une première ligne d'aspiration 15a-15c, au moins une première ligne de refoulement 16a-16d, une deuxième cuve principale 17 destinée à contenir un liquide de traitement, ainsi qu'une ligne de transfert 18.

La première cuve principale 13 est par exemple agencée à l'arrière du système de pulvérisation 10.

Le premier ensemble de pompage 14 comprend une première pompe 19 comprenant elle-même une entrée 20 par laquelle la première pompe 19 aspire un liquide et une sortie 21 par laquelle la première pompe 19 refoule le liquide aspiré par l'entrée 20. Dans la suite de la description, les termes « amont » et « aval » tiennent compte du sens de circulation du liquide dans le circuit de liquide 12, qui est imposé par la première pompe 19.

La ou les premières lignes d'aspiration 15a-15c sont chacune reliées, en aval, à l'entrée 20 de la première pompe 19. La ou les premières lignes d'aspiration 15a-15c sont ainsi agencées en amont de la première pompe 19. La première pompe 19 peut ainsi aspirer du liquide dans la ou chacune des premières lignes d'aspiration 15a-15c pour le refouler. Les premières lignes d'aspiration 15a-15c sont parallèles entre elles.

La ou l'une 15a des premières lignes d'aspiration 15a-15c, dite première ligne d'aspiration de cuve principale, relie la première cuve principale 13 à l'entrée 20 de la première pompe 19. La première pompe 19 peut ainsi aspirer du liquide de traitement provenant de la première cuve principale 13 pour le refouler.

La ou les premières lignes de refoulement 16a-16d sont chacune reliées, en amont, à la sortie 21 de la première pompe 19. La ou les premières lignes de refoulement 16a-16d sont ainsi agencées en aval de la première pompe 19. La première pompe 19 peut ainsi refouler du liquide dans la ou chacune des premières lignes de refoulement 16a-16d. Les premières lignes de refoulement 16a-16d sont parallèles entre elles.

La ou l'une 16a au moins des premières lignes de refoulement 16a-16d, dite ligne de pulvérisation, comprend des buses de pulvérisation 22 montées sur la rampe de pulvérisation 11 et conçues pour pulvériser du liquide sur des végétaux à traiter. Lorsque la première pompe 19 aspire du liquide de traitement de la première cuve principale 13 et que ce liquide de traitement aspiré est refoulé dans la ou les lignes de pulvérisation 16a, les buses de pulvérisation 22 pulvérisent du liquide de traitement de la première cuve principale 13.

La deuxième cuve principale 17 est par exemple agencée à l'avant du système de pulvérisation 10.

La ligne de transfert 18 relie la première cuve principale 13 et la deuxième cuve principale 17 l'une à l'autre. La ligne de transfert 18 peut être unique.

La ligne de transfert 18 comprend un mécanisme de pompage 23 conçu pour aspirer du liquide de traitement provenant de la deuxième cuve principale 17 et pour refouler le liquide de traitement aspiré vers la première cuve principale 13. Du liquide de traitement peut ainsi être transféré de la deuxième cuve principale 17 vers la première cuve principale 13.

Dans la suite de la description, les termes « amont » et « aval » tiennent aussi compte du sens de circulation du liquide dans le circuit de liquide 12, qui est imposé par le mécanisme de pompage 23.

La ligne de transfert 18 comprend en outre une première vanne 24 agencée ou encore installée en aval du mécanisme de pompage 23. La première vanne 24 est conçue pour :
- dans une première position, mettre en communication le mécanisme de pompage 23 avec la première cuve principale 13, et
- dans une deuxième position, mettre en communication le mécanisme de pompage 23 avec l'entrée 20 de la première pompe 19, en contournant la première cuve principale 13.

De cette manière, dans la première position de la première vanne 24, le liquide de traitement provenant de la deuxième cuve principale 17 est aspiré et refoulé par le mécanisme de pompage 23 vers la première vanne 24 où le liquide de traitement est dirigé vers la première cuve principale 13 pour l'alimenter en liquide de traitement provenant de la deuxième cuve principale 17. Le liquide de traitement provenant de la deuxième cuve principale 17 vient donc s'ajouter à celui déjà contenu dans la première cuve principale 13. La première pompe 19 peut alors aspirer du liquide de traitement de la première cuve principale 13 pour en alimenter la ou les lignes de pulvérisation 16a et les buses de pulvérisation 22 qui pulvérisent ainsi ce mélange de liquides de traitement. Les liquides de traitement des première et deuxième cuves principales 13, 17 peuvent alors être les mêmes.

Dans la deuxième position de la première vanne 24, le liquide de traitement provenant de la deuxième cuve principale 17 est aspiré et refoulé par le mécanisme de pompage 23 vers la première vanne 24 où le liquide de traitement de la deuxième cuve principale 17 est dirigé vers l'entrée 20 de la première pompe 19, sans passer par la première cuve principale 13. Dans cette deuxième position, tout mélange des liquides de traitement des première et deuxième cuves principales 13, 17 peut ainsi être évité. La première pompe 19 peut alors sélectivement aspirer du liquide de traitement de la première cuve principale 13 ou du liquide de traitement de la deuxième cuve principale 17 pour en alimenter la ou les lignes de pulvérisation 16a et les buses de pulvérisation 22 qui peuvent ainsi pulvériser du liquide de traitement de la première ou de la deuxième cuve principale 13, 17. Les liquides de traitement des première et deuxième cuves principales 13, 17 peuvent alors être différents.

La première vanne 24 permet ainsi au système de pulvérisation 10 soit de pulvériser, via la première cuve principale 13, du liquide de traitement des première et deuxième cuves principales 13, 17, soit de pulvériser sélectivement du liquide de traitement de la première cuve principale 13 ou du liquide de traitement de la deuxième cuve principale 17. Dans la première position de la première vanne 24, les première et deuxième cuves principales 13, 17 étant par exemple remplies du même liquide de traitement, il est possible de traiter, en une fois, c'est-à-dire en une sortie du système de pulvérisation 10 dans le ou les champs, une plus grande surface de végétaux à traiter. Dans la deuxième position de la première vanne 24, les première et deuxième cuves principales 13, 17 étant par exemple remplies d'un liquide de traitement différent, il est possible de traiter, en une fois, soit les mêmes végétaux à traiter avec deux liquides de traitement différents, soit des végétaux à traiter d'un champ avec l'un des deux liquides de traitement et des végétaux à traiter d'un autre champ avec l'autre des deux liquides de traitement.

Le système de pulvérisation 10 est donc plus adaptable aux besoins d'un agriculteur. Il peut notamment s'adapter en fonction des traitements que l'agriculteur doit apporter à ses champs. Il permet aussi à l'agriculteur de traiter plus, en une fois.

La première vanne 24 peut encore être conçue pour, dans une troisième position, fermer la ligne de transfert 18. Dans cette troisième position, la ligne de transfert 18 ne peut donc alimenter en liquide de traitement de la deuxième cuve principale 17, ni la première cuve principale 13, ni l'entrée 20 de la première pompe 19, en contournant la première cuve principale 13.

La première vanne 24 est par exemple une vanne à trois voies. La première vanne 24 peut être à commande électrique. En variante, la première vanne 24 est à commande pneumatique, notamment au moyen d'un circuit pneumatique lui-même piloté électriquement, ou manuelle. D'autres types de commande peuvent aussi être mis en oeuvre.

Comme décrit précédemment, l'une 15a des premières lignes d'aspiration 15a-15c, dite première ligne d'aspiration de cuve principale, relie la première cuve principale 13 à l'entrée 20 de la première pompe 19.

Une autre 15b des premières lignes d'aspiration 15a-15c, dite première ligne d'aspiration de rinçage, comprend par exemple une première cuve de rinçage 25 destinée à contenir de l'eau claire. La première pompe 19 peut alors aspirer de l'eau claire provenant de la première cuve de rinçage 25 pour rincer ou nettoyer le circuit de liquide 12. Un clapet anti-retour (non référencé) peut encore être prévu entre la première cuve de rinçage 25 et l'entrée 20 de la première pompe 19, de manière à empêcher un retour de liquide vers la première cuve de rinçage 25.

Une autre 15c des premières lignes d'aspiration 15a-15c dite ligne d'aspiration externe, comprend par exemple un connecteur hydraulique d'entrée destiné à être connecté de manière réversible à une source de liquide externe au système de pulvérisation 10. La première pompe 19 peut alors aspirer du liquide externe au système de pulvérisation 10. La ou les premières lignes d'aspiration 15a-15c et la ligne de transfert 18, via la première vanne 24, sont parallèles entre elles.

Comme décrit précédemment, l'une 16a au moins des premières lignes de refoulement 16a-16d, dite ligne de pulvérisation, comprend des buses de pulvérisation 22 pour pulvériser du liquide sur des végétaux à traiter, notamment du liquide de traitement de la première cuve principale 13, du liquide de traitement de la deuxième cuve principale 17 ou du liquide de traitement des première et deuxième cuves principales 13, 17 en fonction du positionnement de la première vanne 24. La ou chaque ligne de pulvérisation 16a peut encore être reliée, en aval, à l'entrée 20 de la première pompe 19, notamment par l'intermédiaire d'une vanne de régulation (non référencée). La ou chaque ligne de pulvérisation 16a forme alors une boucle avec la première pompe 19.

Une autre 16b des premières lignes de refoulement 16a-16d, dite ligne d'incorporation, relie par exemple la sortie 21 de la première pompe 19 à la première cuve principale 13. La ligne d'incorporation 16b comprend un ensemble d'incorporation 26 conçu pour incorporer un produit à incorporer, tel que du produit phytosanitaire liquide ou sous forme de poudre, au liquide refoulé par la première pompe 19 et circulant le long de ladite ligne d'incorporation 16b. De cette manière, la première cuve principale 13 peut être remplie du liquide refoulé par la première pompe 19 auquel a été incorporé le produit à incorporer. Le liquide refoulé par la première pompe 19 peut être de l'eau claire provenant de la première cuve de rinçage 25 via la première ligne d'aspiration de rinçage 15b ou, par l'intermédiaire du connecteur hydraulique d'entrée et via la ligne d'aspiration externe 15c, d'une source d'eau claire externe au système de pulvérisation 10.

Pour cela, l'ensemble d'incorporation 26 comprend par exemple un dispositif d'incorporation 27, notamment une trémie d'incorporation, destiné à contenir le produit à incorporer, ainsi qu'un dispositif à effet Venturi 28. Le dispositif à effet Venturi 28 est conçu pour créer une dépression aspirant le produit à incorporer contenu dans le dispositif d'incorporation 27, lorsque du liquide refoulé par la première pompe 19 circule le long de la ligne d'incorporation 16b à travers le dispositif à effet Venturi 28. De cette manière, le produit aspiré par le dispositif à effet Venturi 28 est incorporé au liquide circulant le long de la ligne d'incorporation 16b à travers ledit dispositif à effet Venturi 28 pour remplir la première cuve principale 13 de liquide auquel le produit a été incorporé. Une autre 16c des premières lignes de refoulement 16a-16d, dite première ligne de brassage, relie par exemple la sortie 21 de la première pompe 19 à la première cuve principale 13. La première ligne de brassage 16c débouche notamment en partie basse de ladite première cuve principale 13, de manière être immergée dans le liquide de traitement contenu dans la première cuve principale 13. La première ligne de brassage 16c peut comprendre une restriction 29 ou au moins une buse de brassage agencée dans la première cuve principale 13, notamment en partie basse de ladite première cuve principale 13, de manière être immergée dans le liquide de traitement contenu dans la première cuve principale 13. La première ligne de brassage 16c peut ainsi envoyer le liquide refoulé par la première pompe 19 vers la première cuve principale 13, de manière à agiter, mélanger ou encore brasser le liquide de traitement contenu dans la première cuve principale 13. Le liquide refoulé par la première pompe 19 peut être du liquide de traitement provenant de la première ligne d'aspiration de cuve principale 15a.

Une autre 16d des premières lignes de refoulement 16a-16d, dite première ligne de rinçage de cuve principale, comprend par exemple au moins une première buse de rinçage 30 agencée à l'intérieur de la première cuve principale 13, notamment en partie haute de ladite première cuve principale 13. La ou les premières buses de rinçage 30 sont en outre conçues pour projeter le liquide refoulé par la première pompe 19 à l'intérieur de la première cuve principale 13, notamment sur des parois de ladite première cuve principale 13. Le liquide refoulé par la première pompe 19 peut être de l'eau claire provenant de la première cuve de rinçage 25. De cette manière, la ou les premières buses de rinçage 30 permettent de rincer la première cuve principale 13.

Le premier ensemble de pompage 14 est par exemple conçu pour sélectivement mettre en communication la ou l'une des premières lignes d'aspiration 15a-15c ou la ligne de transfert 18, via la première vanne 24, avec l'entrée 20 de la première pompe 19. De cette manière, la première pompe 19 peut sélectivement aspirer :
- du liquide de traitement de la première cuve principale 13 via la première ligne d'aspiration de cuve principale 16a,
- le cas échéant, de l'eau claire de la première cuve de rinçage 25 via la première ligne d'aspiration de rinçage 16b,
- le cas échéant, du liquide externe au système de pulvérisation 10 via la ligne d'aspiration externe 15c, notamment par l'intermédiaire du connecteur hydraulique d'entrée, ou
- du liquide de traitement de la deuxième cuve principale 17 via la ligne de transfert 18, lorsque la première vanne 24 occupe la deuxième position et le mécanisme de pompage 23 aspire et refoule du liquide de traitement de la deuxième cuve principale 17.

Le premier ensemble de pompage 14 peut encore être conçu pour sélectivement mettre en communication la sortie 21 de la première pompe 19 avec l'une des ou des premières lignes de refoulement 16a-16d. De cette manière, la première pompe 19 peut sélectivement refouler du liquide :
- vers la ou les lignes de pulvérisation 16a et les buses de pulvérisation 22, et/ou
- vers la ligne d'incorporation 16b et l'ensemble d'incorporation 26, et/ou
- vers la première ligne de brassage 16c, et/ou
- vers la première ligne de rinçage de cuve principale 16d et la ou les premières buses de rinçage 30.

Le premier ensemble de pompage 14 permet ainsi de mettre en communication, par l'intermédiaire de la première pompe 19, les premières lignes d'aspiration 15a-15c et la ligne de transfert 18, via la première vanne 24, avec les premières lignes de refoulement 16a-16d.

Par exemple, dans une première configuration du premier ensemble de pompage 14, la première ligne d'aspiration de cuve principale 15a communique avec la ou les lignes de pulvérisation 16a, de manière à pulvériser du liquide de traitement provenant de la première cuve principale 13 ou, lorsque la première vanne 24 occupe sa première position et que le mécanisme de pompage 23 aspire et refoule du liquide de traitement de la deuxième cuve principale 17 vers la première vanne 24, du liquide de traitement des première et deuxième cuves principales 13, 17. Dans cette première configuration, la première ligne d'aspiration de cuve principale 15a peut en outre communiquer avec la première ligne de brassage 16c, de manière à brasser le liquide de traitement dans la première cuve principale 13.

Dans une deuxième configuration du premier ensemble de pompage 14, la ligne de transfert 18 communique avec la ou les lignes de pulvérisation 16a, en contournant la première cuve principale 13, de manière à pulvériser du liquide de traitement provenant de la deuxième cuve principale 17, lorsque la première vanne 24 occupe sa deuxième position et que le mécanisme de pompage 23 aspire et refoule du liquide de traitement de la deuxième cuve principale 17 vers la première vanne 24.

Dans une troisième configuration du premier ensemble de pompage 14, la première ligne d'aspiration de rinçage 15b ou la ligne d'aspiration externe 15c communique avec la ligne d'incorporation 16b, de manière à incorporer du produit à incorporer à de l'eau claire provenant de la première cuve de rinçage 25 ou d'une source externe d'eau claire.

Dans une quatrième configuration du premier ensemble de pompage 14, la première ligne d'aspiration de rinçage 15b communique avec la première ligne de rinçage de cuve principale 16d, de manière à rincer la première cuve principale 13 à l'eau claire provenant de la première cuve de rinçage 25.

Bien sûr, d'autres configurations du premier ensemble de pompage 14 sont possibles.

Pour cela, le premier ensemble de pompage 14 comprend par exemple un collecteur d'alimentation comprenant des entrées coopérant chacune avec une soupape, une vanne ou un clapet et une sortie reliée à l'entrée 20 de la première pompe 19, ainsi qu'au moins un arbre à cames entraîné en rotation autour d'un axe de rotation et portant une pluralité de cames. Chacune des entrées du collecteur d'alimentation est reliée à l'une de la ou des premières lignes d'aspiration 15a-15c et de la ligne de transfert 18, via la première vanne 24. Les cames du ou de l'un des arbres à cames coopèrent chacune avec l'une des soupapes du collecteur d'alimentation et sont conçues pour sélectivement ouvrir et fermer lesdites soupapes, lorsque l'arbre à came tourne, de manière à mettre en communication l'une des entrées du collecteur avec l'entrée 20 de la première pompe 19. Le premier ensemble de pompage 14 peut aussi comprendre un collecteur de distribution comprenant lui-même une entrée reliée à la sortie 21 de la première pompe 19 et des sorties coopérant chacune avec une soupape, une vanne ou un clapet. Chacune des sorties du collecteur de distribution est reliée à l'une des premières lignes de refoulement 16a-16d. Les cames du ou de l'autre arbre à cames coopèrent chacune avec l'une des soupapes du collecteur de distribution et sont conçues pour sélectivement ouvrir et fermer lesdites soupapes, lorsque l'arbre à came tourne, de manière à mettre en communication la sortie 21 de la première pompe 19 avec l'une des ou des sorties du collecteur de distribution.

Un exemple d'un tel premier ensemble de pompage 14 est décrit dans le document WO 2016/124856 A1 au nom du Demandeur.

En variante (non représentée) du collecteur d'alimentation, le premier ensemble de pompage 14 comprend une ou plusieurs vannes d'aspiration par l'intermédiaire desquelles chacune de la ou des premières lignes d'aspiration 15a-15c et de la ligne de transfert 18, via la première vanne 24, sont reliées à l'entrée 20 de la première pompe 19. La ou les vannes d'aspiration sont conçues pour ouvrir et pour fermer chacune de la ou des premières lignes d'aspiration 15a-15c et de la ligne de transfert 18. Une vanne d'aspiration distincte peut être prévue pour chacune de la ou des premières lignes d'aspiration 15a-15c et de la ligne de transfert 18. Une vanne d'aspiration à multivoies commune peut en variante être prévue pour toutes ou pour plusieurs des premières lignes d'aspiration 15a-15c et ligne de transfert 18.

Le circuit de liquide 12 peut aussi comprendre une vanne (non référencée) conçue pour, dans une première position, mettre en communication la première ligne d'aspiration de cuve principale 15a avec l'entrée 20 de la première pompe 19, et dans une deuxième position, mettre en communication la ligne d'aspiration externe 15c avec l'entrée 20 de la première pompe 19. Ladite vanne permet ainsi de sélectivement alimenter la première pompe 19 en liquide de traitement provenant de la première cuve principale 13 ou en liquide, tel que de l'eau claire, provenant d'une source externe. La première ligne d'aspiration de cuve principale 15a et la ligne d'aspiration externe 15c forment ainsi des lignes distinctes respectivement entre la première ligne d'aspiration de cuve principale 15a et ladite vanne et entre la ligne d'aspiration externe 15c et ladite vanne, et une même ligne entre ladite vanne et l'entrée 20 de la première pompe 19, notamment via le collecteur d'alimentation ou une vanne d'aspiration. Ladite vanne est par exemple une vanne à trois voies. Elle peut être à commande électrique.

En variante (non représentée) du collecteur de distribution, le premier ensemble de pompage 14 peut encore comprendre une ou plusieurs vannes de refoulement par l'intermédiaire desquelles chacune des premières lignes de refoulement 16a-16d sont reliées à la sortie 21 de la première pompe 19. La ou les vannes de refoulement sont conçues pour ouvrir et pour fermer chacune des premières lignes de refoulement 16a-16d. Une vanne de refoulement distincte peut être prévue pour chacune des premières lignes de refoulement 16a-16d. Une vanne de refoulement à multivoies commune peut en variante être prévue pour toutes ou pour plusieurs des premières lignes de refoulement 16a-16d.

La ligne d'incorporation 16b peut encore comprendre une deuxième vanne 31 conçue pour :
- dans une première position, mettre en communication la sortie 21 de la première pompe 19, via l'ensemble d'incorporation 26, avec la première cuve principale 13, et
- dans une deuxième position, mettre en communication la sortie 21 de la première pompe 19, via l'ensemble d'incorporation 26, avec la ligne de transfert 18, entre le mécanisme de pompage 23 et la première vanne 24.

De cette manière, dans la première position de la deuxième vanne 31, la ligne d'incorporation 16b peut remplir la première cuve principale 13 de liquide refoulé par la première pompe 19 auquel le produit a été incorporé. Dans la deuxième position de la deuxième vanne 31, la ligne d'incorporation 16b peut remplir la deuxième cuve principale 17, notamment lorsque le mécanisme de pompage 23 n'aspire, ni ne refoule de liquide de traitement dans la ligne de transfert 18 et que la première vanne 24 occupe la troisième position. La ligne d'incorporation 16b peut ainsi sélectivement remplir la première ou la deuxième cuve principale 13, 17. Il n'est pas donc pas nécessaire de prévoir des lignes d'incorporation 16b différentes pour remplir les première et deuxième cuves principales 13, 17. Un clapet anti-retour (non référencé) peut encore être prévu entre l'ensemble d'incorporation 26 et la deuxième vanne 31, de manière à empêcher un retour de liquide depuis la deuxième vanne 31 vers l'ensemble d'incorporation 26.

La deuxième vanne 31 est par exemple une vanne à trois voies. La deuxième vanne 31 peut être à commande électrique. En variante, la deuxième vanne 31 est à commande pneumatique, notamment au moyen d'un circuit pneumatique lui-même piloté électriquement, ou manuelle. D'autres types de commande peuvent aussi être mis en oeuvre.

Le mécanisme de pompage 23 comprend par exemple un dispositif à effet Venturi 32 conçu pour aspirer du liquide de traitement de la deuxième cuve principale 17 et pour refouler le liquide de traitement aspiré vers la première vanne 24 au moyen d'un injecteur 35. Le dispositif à effet Venturi 32 comprend une entrée 33 reliée à la deuxième cuve principale 17, une sortie 34 reliée à la première vanne 24 et l'injecteur 35 conçu pour injecter du liquide à travers le dispositif à effet Venturi 32 vers la sortie 34. Le cas échéant, la deuxième vanne 31 est agencée entre le dispositif à effet Venturi 32 et la première vanne 24. Le dispositif à effet Venturi 32 est conçu pour créer une dépression aspirant le liquide de traitement provenant de la deuxième cuve principale 17 par l'entrée 33 et le refoulant par la sortie 34, lorsque l'injecteur 35 injecte du liquide à travers le dispositif à effet Venturi 32 en direction de la sortie 34. Le dispositif à effet Venturi 32 présente notamment une portion de tube convergente depuis l'entrée 33 vers une portion rétrécie et une portion divergente depuis la portion rétrécie vers la sortie 34, l'injecteur 35 étant agencé entre l'entrée 33 et la portion rétrécie.

En variante, le mécanisme de pompage 23 peut comprendre une pompe comprenant elle-même une entrée reliée à la deuxième cuve principale 17 et par laquelle ladite pompe aspire le liquide de traitement de la deuxième cuve principale 17, et une sortie reliée à la première vanne 24 et par laquelle ladite pompe refoule le liquide de traitement aspiré par l'entrée 20. Le cas échéant, la deuxième vanne 31 est agencée entre ladite pompe et la première vanne 24.

Afin d'aider au remplissage de la deuxième cuve principale 17 via la deuxième vanne 31 de la ligne d'incorporation 16b, le ligne de transfert 18 peut comprendre un dispositif à effet Venturi additionnel 54 conçu pour aspirer du liquide de traitement de la première cuve principale 13 et pour refouler le liquide de traitement aspiré vers la deuxième cuve principale 17 au moyen d'un injecteur additionnel 55 (figure 2). Le dispositif à effet Venturi additionnel 54 assure ainsi une circulation de liquide de traitement le long de la ligne de transfert 18 dans un sens opposé par rapport au dispositif à effet Venturi 32 du mécanisme de pompage 23.

Le dispositif à effet Venturi additionnel 54 comprend une entrée additionnelle 56, une sortie additionnelle 57 et l'injecteur additionnel 55 conçu pour injecter du liquide à travers le dispositif à effet Venturi additionnel 54 vers la sortie additionnelle 57. L'entrée additionnelle 56 est reliée à la première cuve principale 13, tandis que la sortie additionnelle 57 est reliée à la deuxième cuve principale 17. Autrement dit, l'entrée 33 du dispositif à effet Venturi 32 du mécanisme de pompage 23 et l'entrée additionnelle 56 ne sont pas reliées à la même des première et deuxième cuves principales 13, 17. De même la sortie 34 du dispositif à effet Venturi 32 du mécanisme de pompage 23 et la sortie additionnelle 57 ne sont pas reliées à la même des première et deuxième cuves principales 13, 17.

Le dispositif à effet Venturi additionnel 54 peut être agencé en amont ou en aval du dispositif à effet Venturi 32 du mécanisme de pompage 23, de sorte que l'entrée additionnelle 56 et la sortie additionnelle 57 peuvent être reliée à la première ou la deuxième cuve principale 13, 17 par l'intermédiaire dudit dispositif à effet Venturi 32.

Le dispositif à effet Venturi additionnel 54 est conçu pour créer une dépression aspirant le liquide de traitement de la première cuve principale 13 par l'entrée additionnelle 56 et le refoulant par la sortie additionnelle 57, lorsque l'injecteur additionnel 55 injecte du liquide à travers le dispositif à effet Venturi additionnel 54 en direction de la sortie additionnelle 57. Pour cela, le dispositif à effet Venturi additionnel 54 présente notamment une portion de tube convergente depuis l'entrée additionnelle 56 vers une portion rétrécie et une portion divergente depuis la portion rétrécie vers la sortie additionnelle 57, l'injecteur additionnel 55 étant agencé entre l'entrée additionnelle 56 et la portion rétrécie.

Le circuit de liquide 12 comprend par exemple encore un deuxième ensemble de pompage 36 comprenant lui-même une deuxième pompe 37 comprenant elle-même une entrée 38 par laquelle la deuxième pompe 37 aspire un liquide et une sortie 39 par laquelle la deuxième pompe 37 refoule le liquide aspiré par l'entrée 38.

Dans la suite de la description, les termes « amont » et « aval » tiennent compte du sens de circulation du liquide dans le circuit de liquide 12, qui est imposé par la deuxième pompe 37.

Le circuit de liquide 12 peut aussi comprendre au moins une deuxième ligne d'aspiration 40a, 40b et au moins une deuxième ligne de refoulement 41a-41e.

La ou les deuxièmes lignes d'aspiration 40a, 40b sont chacune reliées, en aval, à l'entrée 38 de la deuxième pompe 37. La ou les deuxièmes lignes d'aspiration 40a, 40b sont ainsi agencées en amont de la deuxième pompe 37. La deuxième pompe 37 peut ainsi aspirer du liquide dans la ou chacune des deuxièmes lignes d'aspiration 40a, 40b pour le refouler. Les deuxièmes lignes d'aspiration 40a, 40b sont parallèles entre elles.

La ou l'une 40a des deuxièmes lignes d'aspiration 40a, 40b, dite deuxième ligne d'aspiration de cuve principale, relie par exemple la deuxième cuve principale 17 à l'entrée 38 de la deuxième pompe 37. La deuxième pompe 37 peut ainsi aspirer du liquide de traitement provenant de la deuxième cuve principale 17 pour le refouler.

Une autre 40b des deuxièmes lignes d'aspiration 40a, 40b, dite deuxième ligne d'aspiration de rinçage, comprend par exemple une deuxième cuve de rinçage 42 destinée à contenir de l'eau claire. La deuxième pompe 37 peut alors aspirer de l'eau claire provenant de la deuxième cuve de rinçage 42 pour rincer ou nettoyer le circuit de liquide 12. Un clapet anti-retour (non référencé) peut encore être prévu entre la deuxième cuve de rinçage 42 et l'entrée 38 de la deuxième pompe 37, de manière à empêcher un retour de liquide vers la deuxième cuve de rinçage 42.

La ou les deuxièmes lignes de refoulement 41a-41e sont chacune reliées, en amont, à la sortie 39 de la deuxième pompe 37. La ou les deuxièmes lignes de refoulement 41a-41e sont ainsi agencées en aval de la deuxième pompe 37. La deuxième pompe 37 peut ainsi refouler du liquide dans la ou chacune des deuxièmes lignes de refoulement 41a-41e.

La ou l'une 41a des deuxièmes lignes de refoulement 41a-41e, dite ligne d'injection, relie par exemple la sortie 39 de la deuxième pompe 37 à l'injecteur 35 du dispositif à effet Venturi 32 du mécanisme de pompage 23. La deuxième pompe 37 peut ainsi aspirer du liquide de traitement provenant de la deuxième cuve principale 17 pour le refouler vers l'injecteur 35 du dispositif à effet Venturi 32, qui injecte alors le liquide de traitement refoulé par la deuxième pompe 37 dans le dispositif à effet Venturi 32. Cette injection provoque, le long de la ligne de transfert 18, une aspiration de liquide de traitement provenant de la deuxième cuve principale 17 pour le refouler vers la première vanne 24 et donc sélectivement vers la première cuve principale 13 ou vers la première pompe 19, en contournant la première cuve principale 13.

Une autre 41b des deuxièmes lignes de refoulement 41a-41e, dite deuxième ligne de brassage, relie par exemple la sortie 39 de la deuxième pompe 37 à la deuxième cuve principale 17. La deuxième ligne de brassage 41b débouche notamment en partie basse de ladite deuxième cuve principale 17, de manière à être immergée dans le liquide de traitement contenu dans la deuxième cuve principale 17. La deuxième ligne de brassage 41b peut comprendre une restriction 43 agencée dans la deuxième cuve principale 17, notamment en partie basse de ladite deuxième cuve principale 17, de manière à être immergée dans le liquide de traitement contenu dans la deuxième cuve principale 17. La deuxième ligne de brassage 41b peut ainsi envoyer le liquide refoulé par la deuxième pompe 37 vers la deuxième cuve principale 17, de manière à agiter, mélanger ou encore brasser le liquide de traitement contenu dans la deuxième cuve principale 17. Le liquide refoulé par la deuxième pompe 37 peut être du liquide de traitement provenant de la deuxième ligne d'aspiration de cuve principale 40a.

Une autre 41c des deuxièmes lignes de refoulement 41a-41e, dite deuxième ligne de rinçage de cuve principale, comprend par exemple au moins une deuxième buse de rinçage 44 agencée à l'intérieur de la deuxième cuve principale 17, notamment en partie haute de ladite deuxième cuve principale 17. La ou les deuxièmes buses de rinçage 44 sont en outre conçues pour projeter le liquide refoulé par la deuxième pompe 37 à l'intérieur de la deuxième cuve principale 17, notamment sur des parois de ladite deuxième cuve principale 17. Le liquide refoulé par la deuxième pompe 37 peut être de l'eau claire provenant de la deuxième cuve de rinçage 42. De cette manière, la ou les deuxièmes buses de rinçage 44 permettent de rincer la deuxième cuve principale 17. Une autre 41d des deuxièmes lignes de refoulement 41a-41e, dite ligne de retour en cuve principale, relie par exemple la sortie 39 de la deuxième pompe 37 à la deuxième cuve principale 17. La ligne de retour en cuve principale 41d débouche notamment en partie basse de ladite deuxième cuve principale 17. La ligne de retour en cuve principale 41d peut déboucher en partie basse de la deuxième cuve principale 17 soit directement, soit au moyen d'un tuyau plongeur s'étendant dans la deuxième cuve principale 17, depuis sa partie haute vers sa partie basse. La ligne de retour en cuve principale 41d peut ainsi envoyer le liquide refoulé par la deuxième pompe 37 vers la deuxième cuve principale 17, sans brasser le liquide de traitement contenu dans la deuxième cuve principale 17. Le liquide refoulé par la deuxième pompe 37 peut être du liquide de traitement provenant de la deuxième ligne d'aspiration de cuve principale 40a.

Une autre 41e des deuxièmes lignes de refoulement 41a-41e, dite ligne d'injection additionnelle, relie par exemple la sortie 39 de la deuxième pompe 37 à l'injecteur additionnel 55 du dispositif à effet Venturi additionnel 54 (figure 2). La deuxième pompe 37 peut ainsi aspirer du liquide de traitement provenant de la deuxième cuve principale 17 pour le refouler vers l'injecteur additionnel 55 du dispositif à effet Venturi additionnel 54, qui injecte alors le liquide de traitement refoulé par la deuxième pompe 37 dans le dispositif à effet Venturi additionnel 54. Cette injection provoque, le long de la ligne de transfert 18, une aspiration de liquide de traitement provenant de la ligne d'incorporation 16b pour le refouler vers la deuxième cuve principale 17, lorsque la deuxième vanne 31 occupe sa deuxième position.

Le deuxième ensemble de pompage 36 peut être conçu pour sélectivement mettre en communication l'une des deuxièmes lignes d'aspiration 40a, 40b avec l'entrée 38 de la deuxième pompe 37. De cette manière, la deuxième pompe 37 peut sélectivement aspirer :
- du liquide de traitement de la deuxième cuve principale 17 via la deuxième ligne d'aspiration de cuve principale 40a, ou
- de l'eau claire de la deuxième cuve de rinçage 42 via la deuxième ligne d'aspiration de rinçage 40b.

Le deuxième ensemble de pompage 36 peut encore être conçu pour sélectivement mettre en communication la sortie 39 de la deuxième pompe 37 avec l'une des ou des deuxièmes lignes de refoulement 41a-41e. De cette manière, la deuxième pompe 37 peut sélectivement refouler du liquide :
- vers la ligne d'injection 41a et le dispositif à effet Venturi 32 du mécanisme de pompage 23, et/ou
- vers la deuxième ligne de brassage 41b, et/ou
- vers la deuxième ligne de rinçage de cuve principale 41c et vers la ou les deuxièmes buses de rinçage 44, et/ou
- vers la ligne de retour en cuve principale 41d, et/ou
- vers la ligne d'injection additionnelle 41e et le dispositif à effet Venturi additionnel 54. Le deuxième ensemble de pompage 36 permet ainsi de mettre en communication, par l'intermédiaire de la deuxième pompe 37, les deuxièmes lignes d'aspiration 40a, 40b avec les deuxièmes lignes de refoulement 41a-41e.

Pour cela, le deuxième ensemble de pompage 36 comprend par exemple une troisième vanne 45 conçue pour :
- dans une première position, mettre en communication la deuxième ligne d'aspiration de cuve principale 40a avec l'entrée 38 de la deuxième pompe 37, et
- dans une deuxième position, mettre en communication la deuxième d'aspiration de rinçage 40b avec l'entrée 38 de la deuxième pompe 37.

De cette manière, dans la première position de la troisième vanne 45, la deuxième pompe 37 est alimentée par la deuxième cuve principale 17 en liquide de traitement. Dans la deuxième position de la troisième vanne 45, la deuxième pompe 37 est alimentée par la deuxième cuve de rinçage 42 en eau claire.

Le deuxième ensemble de pompage 36 comprend par exemple aussi une quatrième, une cinquième et une sixième vannes 46, 47, 48.

La quatrième vanne 46 est conçue pour, dans une première position, mettre en communication la sortie 39 de la deuxième pompe 37 avec la ligne d'injection 41a, et dans une deuxième position, mettre en communication la sortie 39 de la deuxième pompe 37 avec la sixième vanne 48.

La cinquième vanne 47 est conçue pour, dans une première position, mettre en communication la sortie 39 de la deuxième pompe 37 avec la deuxième ligne de brassage 41b, et dans une deuxième position, mettre en communication la sortie 39 de la deuxième pompe 37 avec la sixième vanne 48.

Une restriction (non référencée) est par exemple prévue entre chacune des quatrième et cinquième vannes 46, 47 et la sixième vanne 48. Les restrictions créent des pertes de charge permettant de ne pas perturber le reste du circuit de liquide 12, lorsque les quatrième et cinquième vannes 46, 47 passent de leur première position à leur deuxième position. Le dimensionnement des restrictions est par exemple déterminé de manière expérimentale.

La sixième vanne 48 est conçue pour, dans une première position, mettre en communication la sortie 39 de la deuxième pompe 37, via la quatrième et/ou la cinquième vanne 46, 47 dans sa ou leur deuxième position, avec la deuxième ligne de rinçage de cuve principale 41c, et dans deuxième position, mettre en communication la sortie 39 de la deuxième pompe 37, via la quatrième et/ou la cinquième vanne 46, 47 dans sa ou leur deuxième position, avec la ligne de retour en cuve principale 41d.

Les quatrième, cinquième et sixième vannes 46, 47, 48 permettent ainsi de sélectivement mettre en communication une ou plusieurs des deuxièmes lignes de refoulement 41a-41e avec la sortie 39 de la deuxième pompe 37.

Le deuxième ensemble de pompage 36 peut aussi comprendre une septième vanne 58 conçue pour, dans une première position, mettre en communication la sortie 39 de la deuxième pompe 37, via la quatrième vanne 46 dans sa première position, avec la ligne d'injection 41a, et dans une deuxième position, mettre en communication la sortie 39 de la deuxième pompe 37, via la quatrième vanne 46 dans sa première position, avec la ligne d'injection additionnelle 41e (figure 2).

La troisième et/ou la quatrième et/ou la cinquième et/ou la sixième et/ou la septième vanne 45, 46, 47, 48, 58 sont par exemple des vannes à trois voies. La troisième et/ou la quatrième et/ou la cinquième et/ou la sixième et/ou la septième vanne 45, 46, 47, 48, 58 peuvent être à commande électrique. En variante, la troisième et/ou la quatrième et/ou la cinquième et/ou la sixième et/ou la septième vanne 45, 46, 47, 48, 58 sont à commande pneumatique, notamment au moyen d'un circuit pneumatique lui-même piloté électriquement, ou manuelle. D'autres types de commande peuvent aussi être mis en oeuvre.

Par exemple, dans une première configuration du deuxième ensemble de pompage 36, la deuxième ligne d'aspiration de cuve principale 40a communique avec la ligne d'injection 41a et la deuxième ligne de brassage 41b. Une partie du liquide de traitement de la deuxième cuve principale 17, qui est refoulé par la deuxième pompe 37, est alors dirigé vers la ligne d'injection 41a, de manière à injecter du liquide dans le dispositif à effet Venturi 32 du mécanisme de pompage 23 et à provoquer, le long de la ligne de transfert 18, une aspiration et un refoulement de liquide de traitement de la deuxième cuve principale 17 vers la première vanne 24 pour alimenter la première cuve principale 13 ou la première pompe 19, en contournant la première cuve principale 13. Une autre partie du liquide de traitement de la deuxième cuve principale 17, qui est refoulé par la deuxième pompe 37, est dirigé vers la deuxième ligne de brassage 41b pour brasser le liquide de traitement dans la deuxième cuve principale 17. Pour cela, la troisième vanne 45 peut occuper sa première position. La quatrième vanne 46 et la cinquième vanne 47 peuvent occuper leur première position. La septième vanne 58 peut occuper sa première position.

Dans une deuxième configuration du deuxième ensemble de pompage 36, la deuxième ligne d'aspiration de cuve principale 40a communique avec la ligne d'injection 41a et la ligne de retour en cuve principale 41d. L'autre partie du liquide de traitement de la deuxième cuve principale 17, qui est refoulé par la deuxième pompe 37, est alors dirigé vers la ligne de retour en cuve principale 41d. Pour cela, la troisième vanne 45 peut occuper sa première position. La quatrième vanne 46 peut occuper sa première position, et les cinquième et sixième vannes 47, 48 leur deuxième position. La septième vanne 58 peut occuper sa première position.

Dans une troisième configuration du deuxième ensemble de pompage 36, la deuxième ligne d'aspiration de rinçage 40b communique avec la deuxième ligne de rinçage de cuve principale 41c. L'eau claire de la deuxième cuve de rinçage 42, qui est refoulée par la deuxième pompe 37, est alors dirigé vers la deuxième ligne de rinçage de cuve principale 41d, de manière à rincer la deuxième cuve principale 17 à l'eau claire provenant de la deuxième cuve de rinçage 42. Pour cela, la troisième vanne 45 peut occuper sa deuxième position. Les quatrième et cinquième vannes 46, 47 peuvent occuper leur deuxième position et la sixième vanne 48 sa première position.

Dans une quatrième configuration du deuxième ensemble de pompage 36, la deuxième ligne d'aspiration de cuve principale 40a communique avec la ligne d'injection additionnelle 41e et la deuxième ligne de brassage 41b. Une partie du liquide de traitement de la deuxième cuve principale 17, qui est refoulé par la deuxième pompe 37, est alors dirigé vers la ligne d'injection additionnelle 41e, de manière à injecter du liquide dans le dispositif à effet Venturi additionnelle 54 et à provoquer, le long de la ligne de transfert 18, une aspiration et un refoulement de liquide de traitement provenant notamment de la ligne d'incorporation 16b et de la deuxième vanne 31 dans sa deuxième position vers la deuxième cuve principale 17. Une autre partie du liquide de traitement de la deuxième cuve principale 17, qui est refoulé par la deuxième pompe 37, est dirigé vers la deuxième ligne de brassage 41b pour brasser le liquide de traitement dans la deuxième cuve principale 17. Pour cela, la troisième vanne 45 peut occuper sa première position. La quatrième vanne 46 et la cinquième vanne 47 peuvent occuper leur première position. La septième vanne 58 peut occuper sa deuxième position.

Dans une cinquième configuration du deuxième ensemble de pompage 36, la deuxième ligne d'aspiration de cuve principale 40a communique avec la deuxième ligne de rinçage de cuve principale 41c. Cette cinquième configuration sert par exemple lorsque la deuxième cuve principale 17 est remplie de liquide de traitement dilué à l'eau claire, qui est refoulée par la deuxième pompe 37 et dirigé vers la deuxième ligne de rinçage de cuve principale 41c, de manière à rincer la deuxième cuve principale 17.

Bien sûr, d'autres configurations du deuxième ensemble de pompage 36 sont possibles. En variante (non représentée) à la troisième vanne 45, le deuxième ensemble de pompage 36 comprend une ou plusieurs vannes d'aspiration par l'intermédiaire desquelles chacune des deuxièmes lignes d'aspiration 40a, 40b sont reliées à l'entrée 38 de la deuxième pompe 37. La ou les vannes d'aspiration sont conçues pour ouvrir et pour fermer des deuxièmes lignes d'aspiration 40a, 40b. Une vanne d'aspiration distincte peut être prévue pour chacune des deuxièmes lignes d'aspiration 40a, 40b. Une vanne d'aspiration à multivoies commune peut en variante être prévue pour toutes ou pour plusieurs des deuxièmes lignes d'aspiration 40a, 40b. Encore en variante (non représentée), le deuxième ensemble de pompage 36 comprend un collecteur d'alimentation tel que celui du premier ensemble de pompage 14.

En variante (non représentée) aux quatrième, cinquième et sixième vannes 46, 47, 48 et, le cas échéant, à la septième vanne 58, le deuxième ensemble de pompage 36 comprend une ou plusieurs vannes de refoulement par l'intermédiaire desquelles chacune des deuxièmes lignes de refoulement 41a-41e sont reliées à la sortie 39 de la deuxième pompe 37. La ou les vannes de refoulement sont conçues pour ouvrir et pour fermer chacune des deuxièmes lignes de refoulement 41a-41e. Une vanne de refoulement distincte peut être prévue pour chacune des deuxièmes lignes de refoulement 41a-41e. Une vanne de refoulement à multivoies commune peut en variante être prévue pour toutes ou pour plusieurs des deuxièmes lignes de refoulement 41a-41e. Encore en variante (non représentée), le deuxième ensemble de pompage 36 comprend un collecteur de distribution tel que celui du premier ensemble de pompage 14.

La deuxième ligne de rinçage de cuve principale 41c peut comprendre une voie principale 49 reliant la sixième vanne 48 à la ou aux deuxièmes buses de rinçage 44, ainsi qu'une voie de retour 50 reliant la sixième vanne 48 à l'entrée 38 de la deuxième pompe 37, en parallèle de la voie principale 49. La voie de retour 50 permet par exemple de limiter la quantité d'eau claire pompée par la deuxième pompe 37 via la deuxième ligne d'aspiration de rinçage 40b. La deuxième cuve de rinçage 42 se vide donc plus lentement et le rinçage de la deuxième cuve principale 17 peut durer plus longtemps, le rendant ainsi plus efficace. Un clapet anti-retour (non référencé) est par exemple prévu le long de chacune des voies principale 49 et de retour 50, de manière à empêcher une circulation de liquide dans chacune desdites voies principale 49 et de retour 50 vers la sixième vanne 48. Une restriction (non référencée) peut être prévue le long de la voie principale 49, par exemple entre le clapet anti-retour de ladite voie principale 49 et la ou les deuxièmes buses de rinçage 44, et/ou le long de la voie de retour 50.

Le système de pulvérisation 10 comprend par exemple aussi une unité de commande 51 électronique conçue pour piloter le premier ensemble de pompage 14 et/ou le mécanisme de pompage 23, notamment via le deuxième ensemble de pompage 36, et/ou la première vanne 24 et/ou la deuxième vanne 31 et/ou le deuxième ensemble de pompage 36.

L'unité de commande 51 peut comprendre une interface d'entrée, une interface de sortie, une mémoire de données, une mémoire de programmes, un microprocesseur ainsi qu'au moins un bus de communication qui les connecte entre eux.

L'interface d'entrée est par exemple connectée à une interface utilisateur (non représentée) par l'intermédiaire de laquelle un agriculteur communique avec l'unité de commande 51. L'interface utilisateur peut être installée dans une cabine du tracteur ou sur le système de pulvérisation 10. Des instructions de changement de configuration pour le premier et/ou le deuxième ensemble de pompage 14, 36 et/ou de changement de position pour la première et/ou la deuxième vanne 24, 31 sont par exemple envoyées à l'unité de commande 51 par l'intermédiaire de l'interface utilisateur. L'unité de commande 51 peut alors commander le premier et/ou le deuxième ensemble de pompage 14, 36 de changer de configuration et/ou la première et/ou la deuxième vanne 24, 31 de changer de position sur la base desdites instructions.

L'interface de sortie est par exemple connectée :
- au premier ensemble de pompage 14, notamment à la première pompe 19 et/ou à un dispositif d'entraînement en rotation du ou des arbres à cames autour de son ou de leur axe de rotation, tel qu'un moteur électrique, et/ou
- au mécanisme de pompage 23, notamment via le deuxième ensemble de pompage 36, et plus particulièrement via la deuxième pompe 37, la troisième vanne 45 et la quatrième vanne 46, et/ou
- à la première vanne 24, et/ou
- à la deuxième vanne 31, et/ou
- au deuxième ensemble de pompage 36, notamment à la deuxième pompe 37 et aux troisième, quatrième, cinquième et sixième vannes 45, 46, 47, 48.

La première cuve principale 13 comprend par exemple encore un premier détecteur de niveau 52 conçu pour détecter un niveau de liquide dans la première cuve principale 13, tandis que la deuxième cuve principale 17 comprend un deuxième détecteur niveau 53 conçu pour détecter un niveau de liquide dans la deuxième cuve principale 17. Les premier et deuxième détecteurs de niveau 52, 53 sont par exemple connectés à l'unité de commande 51, notamment via l'interface d'entrée de ladite unité de commande 51.

Les premier et deuxième détecteurs de niveau 52, 53 sont par exemple chacun formés par un capteur de pression installé en partie basse, notamment au fond, de la première ou de la deuxième cuve principale 13, 17. Le capteur de pression mesure ainsi la pression de liquide en partie basse, notamment au fond, de la première ou de la deuxième cuve principale 13, 17. Cette pression correspond à la colonne d'eau au-dessus du capteur de pression dans la première ou la deuxième cuve principale 13, 17, et est donc représentative du niveau de liquide dans ladite première ou deuxième cuve principale 13, 17. Le capteur de pression peut être installé au fond de la première ou de la deuxième cuve principale 13, 17. En variante, le capteur de pression peut être suspendu dans la première ou dans la deuxième cuve principale 13, 17 par un câble accroché en partie supérieure de ladite première ou deuxième cuve principale 13, 17. Le capteur de pression est par exemple connecté à l'unité de commande 51, notamment via l'interface d'entrée de ladite unité de commande 51.

En variante, les premier et deuxième détecteurs de niveau 52, 53 comprennent chacun un flotteur conçu pour flotter sur du liquide dans la première ou la deuxième cuve principale 13, 17, ainsi qu'un capteur connecté à l'unité de commande 51, notamment via l'interface d'entrée de ladite unité de commande 51, et conçu pour envoyer à l'unité de commande 51 un signal correspondant à la position du flotteur, notamment sa hauteur, lorsqu'il flotte sur le liquide dans la première ou la deuxième cuve principale 13, 17. La position du flotteur est représentative du niveau de liquide dans la première ou la deuxième cuve principale 13, 17.

D'autres types de détecteur niveau peuvent bien sûr être mis en oeuvre pour les premier et deuxième détecteurs de niveau 52, 53.

L'unité de commande 51 peut être conçue pour commander le mécanisme de pompage 23, notamment via le deuxième ensemble de pompage 36, d'aspirer et de refouler, le long de la ligne de transfert 18, du liquide de traitement provenant de la deuxième cuve principale 17 vers la première cuve principale 13, lorsque la première vanne 24 occupe sa première position et qu'une différence entre le niveau de liquide détecté par le deuxième détecteur de niveau 53 dans la deuxième cuve principale 17 et le niveau de liquide détecté par le premier détecteur de niveau 52 dans la première cuve principale 13 est supérieure à une différence seuil prédéterminée. Une telle différence de niveau intervient par exemple, lorsque le premier ensemble de pompage 14 occupe première configuration, c'est-à-dire pendant la pulvérisation. Comme indiqué précédemment, il peut s'agir d'une différence de pressions mesurées. La différence seuil est par exemple enregistrée dans la mémoire de données de l'unité de commande 51.

De cette manière, il est possible de maintenir l'équilibrage des première et deuxième cuve principale 13, 17, qui sont par exemple respectivement agencée à l'arrière et à l'avant du système de pulvérisation 10, et donc d'éviter tout risque de basculement du système de pulvérisation 10, notamment de l'engin agricole qui le porte.

L'unité de commande 51 peut notamment commander le deuxième ensemble de pompage 36 d'occuper sa première ou sa deuxième configuration, lorsque la première vanne 24 occupe sa première position et que la différence entre les niveaux de liquide détecté dans la deuxième cuve principale 17 et dans la première cuve principale 13 est supérieure à la différence seuil. En particulier, l'unité de commande 51 peut commander la troisième vanne 45 d'occuper sa première position, la deuxième pompe 37 d'aspirer et de refouler du liquide de traitement provenant de la deuxième cuve principale 17 via la deuxième ligne d'aspiration de cuve principale 40a et la quatrième vanne 46 d'occuper sa première position. L'unité de commande 51 peut en outre commander la cinquième vanne 47 d'occuper sa première position ou les cinquième et sixième vannes 47, 48 d'occuper leur deuxième position.

Par exemple, la première cuve principale 13, le premier ensemble de pompage 14, la ou les premières lignes d'aspiration 15a-15c et la ou les premières lignes de refoulement 16a-16d forment un premier sous-système de pulvérisation 101, tandis que la deuxième cuve principale 17, le mécanisme de pompage 23 et le cas échéant, le deuxième ensemble de pompage 36, la ou les deuxièmes lignes d'aspiration 40a, 40b, la ou les deuxièmes lignes de refoulement 41a-41e forment un deuxième sous-système de pulvérisation 102.

La ligne de transfert 18 est en outre formée d'au moins deux tronçons de transfert 103, 104, 105 conçus pour se connecter et se déconnecter entre eux de manière réversible au moyen de connecteurs, notamment agencés au niveau de vannes 106, 107. Les connecteurs sont par exemple pourvus de moyens d'accouplement et de désaccouplement rapide, notamment sans outil.

L'un 103 des tronçons de transfert 103, 104, 105, dit premier tronçon de transfert, fait partie du premier sous-système de pulvérisation 101. Le premier tronçon de transfert 103 comprend par exemple la première vanne 24. Il est relié, en aval de la première vanne 24, d'une part à la première cuve principale 13 et d'autre part à l'entrée 20 de la première pompe 19, en contournant la première cuve principale 13.

L'autre ou un autre 105 des tronçons de transfert 103, 104, 105, dit deuxième tronçon de transfert, fait partie du deuxième sous-système de pulvérisation 102. Le deuxième tronçon de transfert 105 comprend par exemple le mécanisme de pompage 23.

Un autre 104 des tronçons de transfert 103, 104, 105, dit troisième tronçon de transfert, peut en outre être conçu pour raccorder les premier et deuxième tronçons de transfert 103, 105 l'un à l'autre par l'intermédiaire des connecteurs. Les vannes 106, 107 sont conçues pour s'ouvrir et se fermer, de manière à permettre la connexion et la déconnexion des connecteurs. Le troisième tronçon de transfert 104, les connecteurs et, le cas échéant, les vannes 106, 107, sont par exemple portés par l'engin agricole. Ledit tronçon de transfert 104 peut encore comprendre le dispositif à effet Venturi additionnel 54. Un connecteur associé à une vanne 108, tous deux portés par l'engin agricole, peut alors être prévu le long de la ligne d'injection additionnelle 41e, entre le dispositif à effet Venturi additionnel 54 et la septième vanne 58, pour connecter et déconnecter de manière réversible le dispositif à effet Venturi additionnel 54 à la septième vanne 58 (figure 2).

Selon un mode de réalisation de l'invention (non illustré), le système de pulvérisation 10 comprend une autre rampe de pulvérisation et une autre ligne de transfert qui relie la première cuve principale 13 et la deuxième cuve principale 17 l'une à l'autre. En outre, l'une au moins des deuxièmes lignes de refoulement 41a-41e, dite autre ligne de pulvérisation, comprend des autres buses de pulvérisation montées sur l'autre rampe de pulvérisation et conçues pour pulvériser du liquide sur des végétaux à traiter.

L'autre ligne de transfert comprend un autre mécanisme de pompage conçu pour aspirer du liquide de traitement provenant de la première cuve principale 13 et pour refouler le liquide de traitement aspiré vers la deuxième cuve principale 17, ainsi qu'une autre première vanne agencée ou encore installée en aval de l'autre mécanisme de pompage, l'autre première vanne étant conçue pour, dans une première position, mettre en communication l'autre mécanisme de pompage avec la deuxième cuve principale 17, et dans une deuxième position, mettre en communication l'autre mécanisme de pompage avec l'entrée 38 de la deuxième pompe 37, en contournant la deuxième cuve principale 17. L'autre ligne de transfert assure ainsi le transfert de liquide de traitement de la première cuve principale 13 à la deuxième cuve principale 17 ou à l'entrée 38 de la deuxième pompe 37, sans passer par la deuxième cuve principale 17, notamment pour alimenter la ou les autres lignes de pulvérisation et les autres buses de pulvérisation qui peuvent donc soit pulvériser du liquide de traitement des première et deuxième cuves principales 13, 17, soit pulvériser sélectivement du liquide de traitement de la première cuve principale 13 ou du liquide de traitement de la deuxième cuve principale 17.

L'autre première vanne est par exemple une vanne à trois voies. L'autre première vanne peut être à commande électrique, à commande pneumatique, notamment au moyen d'un circuit pneumatique lui-même piloté électriquement, ou à commande manuelle. D'autres types de commande peuvent aussi être mis en oeuvre. L'autre première vanne peut être connectée à l'unité de commande 51, notamment par l'intermédiaire de son interface de sortie.

L'autre mécanisme de pompage comprend par exemple un autre dispositif à effet Venturi conçu pour aspirer du liquide de traitement de la première cuve principale 13 et pour refouler le liquide de traitement aspiré vers l'autre première vanne au moyen d'un autre injecteur. L'autre dispositif à effet Venturi comprend une autre entrée reliée à la première cuve principale 13, une autre sortie reliée à l'autre première vanne et l'autre injecteur conçu pour injecter du liquide à travers l'autre dispositif à effet Venturi vers l'autre sortie. L'autre dispositif à effet Venturi est conçu pour créer une dépression aspirant le liquide de traitement provenant de la première cuve principale 13 par l'autre entrée et le refoulant par l'autre sortie, lorsque l'autre injecteur injecte du liquide à travers l'autre dispositif à effet Venturi en direction de l'autre sortie. L'autre dispositif à effet Venturi présente notamment une portion de tube convergente depuis l'autre entrée vers une portion rétrécie et une portion divergente depuis la portion rétrécie vers l'autre sortie, l'autre injecteur étant agencé entre l'autre entrée et la portion rétrécie.

Le système de pulvérisation 10 décrit ci-dessus est particulièrement avantageux car il permet, au moyen de la première vanne 24, soit de pulvériser, via la première cuve principale 13, du liquide de traitement provenant de la première cuve principale 13 et de la deuxième cuve principale 17, soit de pulvériser sélectivement du liquide de traitement provenant de la première cuve principale 13 ou du liquide de traitement provenant de la deuxième cuve principale 17, les liquides de traitement pouvant alors être différents. Le système de pulvérisation 10 est donc plus adaptable aux besoins de l'agriculteur.

## Revendications

1. Système de pulvérisation (10) pour engin agricole, comprenant une rampe de pulvérisation (11) et un circuit de liquide (12) comprenant lui-même :
- une première cuve principale (13) destinée à contenir un liquide de traitement,
- un premier ensemble de pompage (14) comprenant une première pompe (19) comprenant une entrée (20) et une sortie (21), la première pompe (19) étant conçue pour aspirer du liquide par ladite entrée (20) et pour refouler le liquide aspiré par ladite sortie (21),
- au moins une première ligne d'aspiration (15a-15c) reliée, en aval, à l'entrée (20) de la première pompe (19), la ou l'une (15a) des premières lignes d'aspiration (15a-15c), dite première ligne d'aspiration de cuve principale, reliant la première cuve principale (13) à l'entrée (20) de la première pompe (19),
- au moins une première ligne de refoulement (16a-16d) reliée, en amont, à la sortie (21) de la première pompe (19), la ou l'une (16a) au moins des premières lignes de refoulement (16a-16d), dite ligne de pulvérisation, comprenant des buses de pulvérisation (22) montées sur la rampe de pulvérisation (11) et conçues pour pulvériser du liquide sur des végétaux à traiter,
- une deuxième cuve principale (17) destinée à contenir un liquide de traitement,
- une ligne de transfert (18) reliant la première cuve principale (13) et la deuxième cuve principale (17) l'une à l'autre et comprenant un mécanisme de pompage (23) conçu pour aspirer du liquide de traitement provenant de la deuxième cuve principale (17) et pour refouler le liquide de traitement aspiré vers la première cuve principale (13), la ligne de transfert (18) comprend en outre une première vanne (24) installée en aval du mécanisme de pompage (23) et conçue pour :
- dans une première position, mettre en communication le mécanisme de pompage (23) avec la première cuve principale (13), de manière à alimenter la première pompe (19) et la ou les lignes de pulvérisation (16a) de liquide de traitement provenant des première et deuxième cuves principales (13, 17), via la première cuve principale (13), et le système de pulvérisation (10) étant **caractérisé en ce que**:
- dans une deuxième position, la vanne est conçue pour mettre en communication le mécanisme de pompage (23) avec l'entrée (20) de la première pompe (19), en contournant la première cuve principale (13), de manière à alimenter sélectivement la première pompe (19) et la ou les lignes de pulvérisation (16a) de liquide de traitement provenant de la première cuve principale (13) ou de liquide de traitement provenant de la deuxième cuve principale (17).

2. Système de pulvérisation (10) selon la revendication 1, dans lequel l'une (16b) des premières lignes de refoulement (16a-16d), dite ligne d'incorporation, relie la sortie (21) de la première pompe (19) à la première cuve principale (13) et comprend un ensemble d'incorporation (26) conçu pour incorporer un produit à incorporer au liquide refoulé par la première pompe (19) et circulant le long de ladite ligne d'incorporation (16b), ainsi qu'une deuxième vanne (31) conçue pour :
- dans une première position, mettre en communication la sortie (21) de la première pompe (19), via l'ensemble d'incorporation (26), avec la première cuve principale (13), et
- dans une deuxième position, mettre en communication la sortie (21) de la première pompe (19), via l'ensemble d'incorporation (26), avec la ligne de transfert (18), entre le mécanisme de pompage (23) et la première vanne (24).

3. Système de pulvérisation (10) selon la revendication 1 ou la revendication 2, dans lequel :
- le mécanisme de pompage (23) comprend un dispositif à effet Venturi (32) conçu pour aspirer du liquide de traitement de la deuxième cuve principale (17) et pour refouler ledit liquide de traitement vers la première vanne (24) au moyen d'un injecteur (35),
- le circuit de liquide (12) comprend :
* un deuxième ensemble de pompage (36) comprenant une deuxième pompe (37) comprenant elle-même une entrée (38) et une sortie (39), la deuxième pompe (37) étant conçue pour aspirer du liquide par ladite entrée (38) et pour refouler le liquide aspiré par ladite sortie (39),
* au moins une deuxième ligne d'aspiration (40a, 40b) reliée, en aval, à l'entrée (38) de la deuxième pompe (37), la ou l'une (40a) des deuxièmes lignes d'aspiration (40a, 40b), dite deuxième ligne d'aspiration de cuve principale, reliant la deuxième cuve principale (17) à l'entrée (38) de la deuxième pompe (37),
* au moins une deuxième ligne de refoulement (41a-41e) reliée, en amont, à la sortie (39) de la deuxième pompe (37), la ou l'une (41a) des deuxièmes lignes de refoulement (41a-41e), dite ligne d'injection, reliant la sortie (39) de la deuxième pompe (37) à l'injecteur (35) du dispositif à effet Venturi (32) du mécanisme de pompage (23), de manière à provoquer, le long de la ligne de transfert (18), une aspiration et un refoulement par le dispositif à effet Venturi (32) de liquide de traitement provenant de la deuxième cuve principale (17) vers la première vanne (24).

4. Système de pulvérisation (10) selon l'une des revendications 1 à 3, dans lequel :
- le premier ensemble de pompage (14) est conçu pour sélectivement mettre en communication la ou l'une des premières lignes d'aspiration (15a-15c) ou la ligne de transfert (18), via la première vanne (24), avec l'entrée (20) de la première pompe (19) et/ou pour sélectivement mettre en communication la sortie (21) de la première pompe (19) avec l'une des ou des premières lignes de refoulement (16a-16d) ;
et/ou
- le deuxième ensemble de pompage (36) est conçu pour sélectivement mettre en communication l'une des deuxièmes lignes d'aspiration (40a, 40b) avec l'entrée (38) de la deuxième pompe (37) et/ou pour sélectivement mettre en communication la sortie (39) de la deuxième pompe (37) avec l'une des ou des deuxièmes lignes de refoulement (41a-41e).

5. Système de pulvérisation (10) selon l'une des revendications 1 à 4, comprenant une unité de commande (51) électronique, dans lequel la première cuve principale (13) comprend un premier détecteur de niveau (52) conçu pour détecter un niveau de liquide dans la première cuve principale (13), dans lequel la deuxième cuve principale (17) comprend un deuxième détecteur niveau (53) conçu pour détecter un niveau de liquide dans la deuxième cuve principale (17) et dans lequel l'unité de commande (51) est conçue pour commander le mécanisme de pompage (23) d'aspirer et de refouler, le long de la ligne de transfert (18), du liquide de traitement provenant de la deuxième cuve principale (17) vers la première cuve principale (13), lorsque la première vanne (24) occupe sa première position et qu'une différence entre le niveau de liquide détecté par le deuxième détecteur de niveau (53) et le niveau de liquide détecté par le premier détecteur de niveau (52) est supérieure à une différence seuil prédéterminée.

6. Système de pulvérisation (10) selon l'une des revendications 1 à 5, s'étendant suivant une direction longitudinale orientée d'arrière en avant dans un sens d'avancement dudit système de pulvérisation (10), et dans lequel la première cuve principale (13) est agencée à l'arrière du système de pulvérisation (10), tandis que la deuxième cuve principale (17) est agencée à l'avant du système de pulvérisation (10).

7. Système de pulvérisation (10) selon l'une des revendications 1 à 6, dans lequel :
- la première cuve principale (13), le premier ensemble de pompage (14), la ou les premières lignes d'aspiration (15a-15c) et la ou les premières lignes de refoulement (16a-16d) forment un premier sous-système de pulvérisation (101),
- la deuxième cuve principale (17) et le mécanisme de pompage (23) forment un deuxième sous-système de pulvérisation (102),
- la ligne de transfert (18) est en outre formée d'au moins deux tronçons de transfert (103, 104, 105) conçus pour se connecter et se déconnecter entre eux de manière réversible, l'un (103) des tronçons de transfert (103, 104, 105), dit premier tronçon de transfert, faisant partie du premier sous-système de pulvérisation (101) et comprenant la première vanne (24), l'autre ou un autre (104) des tronçons de transfert (103, 104, 105), dit deuxième tronçon de transfert, faisant partie du deuxième sous-système de pulvérisation (102) et comprenant le mécanisme de pompage (23).

8. Système de pulvérisation (10) selon l'une des revendications 1 à 7, dans lequel le circuit de liquide (12) comprend :
- un deuxième ensemble de pompage (36) comprenant une deuxième pompe (37) comprenant elle-même une entrée (38) et une sortie (39), la deuxième pompe (37) étant conçue pour aspirer du liquide par ladite entrée (38) et pour refouler le liquide aspiré par ladite sortie (39),
- au moins une deuxième ligne d'aspiration (40a, 40b) reliée, en aval, à l'entrée (38) de la deuxième pompe (37), la ou l'une (40a) des deuxièmes lignes d'aspiration (40a, 40b), dite deuxième ligne d'aspiration de cuve principale, reliant la deuxième cuve principale (17) à l'entrée (38) de la deuxième pompe (37),
- au moins une deuxième ligne de refoulement (41a-41e) reliée, en amont, à la sortie (39) de la deuxième pompe (37),
le système de pulvérisation comprenant en outre une autre rampe de pulvérisation et une autre ligne de transfert reliant la première cuve principale (13) et la deuxième cuve principale (17), l'une au moins des deuxièmes lignes de refoulement (41a-41e), dite autre ligne de pulvérisation, comprenant des autres buses de pulvérisation montées sur l'autre rampe de pulvérisation et conçues pour pulvériser du liquide sur des végétaux à traiter, l'autre ligne de transfert comprenant :
- un autre mécanisme de pompage conçu pour aspirer du liquide de traitement provenant de la première cuve principale (13) et pour refouler le liquide de traitement aspiré vers la deuxième cuve principale (17), et
- une autre première vanne agencée en aval de l'autre mécanisme de pompage, l'autre première vanne étant conçue pour :
* dans une première position, mettre en communication l'autre mécanisme de pompage avec la deuxième cuve principale (17), et
* dans une deuxième position, mettre en communication l'autre mécanisme de pompage avec l'entrée (38) de la deuxième pompe (37), en contournant la deuxième cuve principale (17), de manière à alimenter sélectivement la deuxième pompe (37) et la ou les autres lignes de pulvérisation de liquide de traitement provenant de la deuxième cuve principale (17) ou de liquide de traitement provenant de la première cuve principale (13).

9. Sous-système de pulvérisation pour système de pulvérisation (10) selon la revendication 7, ledit sous-système de pulvérisation formant le premier sous-système de pulvérisation (101), le premier tronçon (103) étant apte à se connecter de manière réversible au deuxième tronçon (105) du deuxième sous-système (102).

10. Engin agricole comprenant un système de pulvérisation (10) selon l'une des revendications 1 à 8.

## Patentansprüche

1. Sprühsystem (10) für eine Landmaschine, umfassend ein Sprühgestänge (11) und einen Flüssigkeitskreis (12), der selbst umfasst:
- einen ersten Haupttank (13), der bestimmt ist, eine Behandlungsflüssigkeit zu enthalten,
- eine erste Pumpenanordnung (14), die ein erste Pumpe (19) umfasst, die einen Einlass (20) und einen Auslass (21) umfasst, die erste Pumpe (19) eingerichtet ist, um Flüssigkeit durch den Einlass (20) anzusaugen und um die angesaugte Flüssigkeit durch den Auslass (21) abzugeben,
- mindestens eine erste Ansaugleitung (15a-15c), die stromabwärts mit dem Einlass (20) der ersten Pumpe (19) verbunden ist, die oder eine (15a) der ersten Ansaugleitungen (15a-15c), bezeichnet als erste Haupttank-Ansaugleitung, den ersten Haupttank (13) mit dem Einlass (20) der ersten Pumpe (19) verbindet,
- mindestens eine erste Abgabeleitung (16a-16d), die stromaufwärts mit dem Auslass (21) der ersten Pumpe (19) verbunden ist, die oder mindestens eine (16a) der ersten Abgabeleitungen (16a-16d), bezeichnet als Sprühleitung, Sprühdüsen (22) umfasst, die auf dem Sprühgestänge (11) angebracht und eingerichtet sind, um Flüssigkeit auf die zu behandelnden Pflanzen zu sprühen,
- einen zweiten Haupttank (17), der bestimmt ist, eine Behandlungsflüssigkeit zu enthalten,
- eine Übertragungsleitung (18), die den ersten Haupttank (13) und den zweiten Haupttank (17) miteinander verbindet und einen Pumpmechanismus (23) umfasst, der eingerichtet ist, um Behandlungsflüssigkeit aus dem zweiten Haupttank (17) anzusaugen und um die angesaugte Behandlungsflüssigkeit in den ersten Haupttank (13) abzugeben,
die Übertragungsleitung (18) ferner ein erstes Ventil (24) umfasst, das stromabwärts des Pumpmechanismus (23) installiert und eingerichtet ist, um:
- in einer ersten Position den Pumpmechanismus (23) mit dem ersten Haupttank (13) derart in Kommunikation zu versetzen, dass die erste Pumpe (19) und die Sprühleitung(en) (16a) mit Behandlungsflüssigkeit aus dem ersten und zweiten Haupttank (13, 17) über den ersten Haupttank (13) versorgt werden, das Sprühsystem (10) **dadurch gekennzeichnet ist, dass**:
- in einer zweiten Position das Ventil eingerichtet ist, um den Pumpmechanismus (23) mit dem Einlass (20) der ersten Pumpe (19) unter Umgehung des ersten Haupttanks (13) derart in Kommunikation zu versetzen, dass die erste Pumpe (19) und die Sprühleitung(en) (16a) mit Behandlungsflüssigkeit aus dem ersten Haupttank (13) oder mit Behandlungsflüssigkeit aus dem zweiten Haupttank (17) selektiv versorgt werden.

2. Sprühsystem (10) nach Anspruch 1, wobei eine (16b) der ersten Abgabeleitungen (16a-16d), bezeichnet als Einmischleitung, den Auslass (21) der ersten Pumpe (19) mit dem ersten Haupttank (13) verbindet und eine Einmischanordnung (26) umfasst, die eingerichtet ist, um ein einzumischendes Produkt in die von der ersten Pumpe (19) abgegebene und entlang der Einmischleitung (16b) fließende Flüssigkeit einzumischen, sowie ein zweites Ventil (31), das eingerichtet ist, um:
- in einer ersten Position den Auslass (21) der ersten Pumpe (19) über die Einmischanordnung (26) mit dem ersten Haupttank (13) in Kommunikation zu versetzen, und
- in einer zweiten Position den Auslass (21) der ersten Pumpe (19) über die Einmischanordnung (26) mit der Übertragungsleitung (18) zwischen dem Pumpmechanismus (23) und dem ersten Ventil (24) in Kommunikation zu versetzen.

3. Sprühsystem (10) nach Anspruch 1 oder Anspruch 2, wobei:
- der Pumpmechanismus (23) eine Vorrichtung mit Venturi-Effekt (32) umfasst, die eingerichtet ist, um Behandlungsflüssigkeit aus dem zweiten Haupttank (17) anzusaugen und um die Behandlungsflüssigkeit zum ersten Ventil (24) mittels eines Injektors (35) abzugeben,
- der Flüssigkeitskreis (12) umfasst:
* eine zweite Pumpenanordnung (36), die ein zweite Pumpe (37) umfasst, die selbst einen Einlass (38) und einen Auslass (39) umfasst, die zweite Pumpe (37) eingerichtet ist, um Flüssigkeit durch den Einlass (38) anzusaugen und um die angesaugte Flüssigkeit durch den Auslass (39) abzugeben,
* mindestens eine zweite Ansaugleitung (40a-40b), die stromabwärts mit dem Einlass (38) der zweiten Pumpe (37) verbunden ist, die oder eine (40a) der zweiten Ansaugleitungen (40a-40b), bezeichnet als zweite Haupttank-Ansaugleitung, den zweiten Haupttank (17) mit dem Einlass (38) der zweiten Pumpe (37) verbindet,
* mindestens eine zweite Abgabeleitung (41a-41e), die stromaufwärts mit dem Auslass (39) der zweiten Pumpe (37) verbunden ist, die oder eine (41a) der zweiten Abgabeleitungen (41a-41e), bezeichnet als Einleitleitung, den Auslass (39) der zweiten Pumpe (37) mit dem Injektor (35) der Vorrichtung mit Venturi-Effekt (32) des Pumpmechanismus (23) derart verbindet, dass entlang der Übertragungsleitung (18) eine Ansaugung und eine Abgabe durch die Vorrichtung mit Venturi-Effekt (32) von Behandlungsflüssigkeit aus dem zweiten Haupttank (17) zum ersten Ventil (24) veranlasst wird.

4. Sprühsystem (10) nach einem der Ansprüche 1 bis 3, wobei:
- die erste Pumpenanordnung (14) eingerichtet ist, um die oder eine der ersten Ansaugleitungen (15a-15c) oder die Übertragungsleitung (18) über das erste Ventil (24) mit dem Einlass (20) der ersten Pumpe (19) selektiv in Kommunikation zu versetzen und/oder um den Auslass (21) der ersten Pumpe (19) mit einer der oder den ersten Abgabeleitungen (16a-16d) selektiv in Kommunikation zu versetzen;
und/oder
- die zweite Pumpenanordnung (36) eingerichtet ist, um eine der zweiten Ansaugleitungen (40a, 40b) mit dem Einlass (38) der zweiten Pumpe (37) selektiv in Kommunikation zu versetzen und/oder um den Auslass (39) der zweiten Pumpe (37) mit einer der oder den zweiten Abgabeleitungen (41a-41e) selektiv in Kommunikation zu versetzen.

5. Sprühsystem (10) nach einem der Ansprüche 1 bis 4, umfassend eine elektronische Steuereinheit (51), wobei der erste Haupttank (13) einen ersten Niveaudetektor (52) umfasst, der eingerichtet ist, um ein Flüssigkeitsniveau im ersten Haupttank (13) zu ermitteln, der zweite Haupttank (17) einen zweiten Niveaudetektor (53) umfasst, der eingerichtet ist, um ein Flüssigkeitsniveau im zweiten Haupttank (17) zu ermitteln und die Steuereinheit (51) eingerichtet ist, um dem Pumpmechanismus (23) zu befehlen, entlang der Übertragungsleitung (18) Behandlungsflüssigkeit aus dem zweiten Haupttank (17) zum ersten Haupttank (13) anzusaugen und abzugeben, wenn das erste Ventil (24) seine erste Position einnimmt und ein Unterschied zwischen dem vom zweiten Niveaudetektor (53) ermittelten Flüssigkeitsniveau und dem vom ersten Niveaudetektor (52) ermittelten Flüssigkeitsniveau größer als ein vorherbestimmter Schwellenwertunterschied ist.

6. Sprühsystem (10) nach einem der Ansprüche 1 bis 5, das sich in einer von hinten nach vorn in einer Vorwärtsrichtung des Sprühsystems (10) ausgerichteten Längsrichtung erstreckt und wobei der erste Haupttank (13) im hinteren Teil des Sprühsystems (10) ausgebildet ist, wohingegen der zweite Haupttank (17) im vorderen Teil des Sprühsystems (10) angeordnet ist.

7. Sprühsystem (10) nach einem der Ansprüche 1 bis 6, wobei:
- der erste Haupttank (13), die erste Pumpenanordnung (14), die erste(n) Ansaugleitung(en) (15a-15c) und die erste(n) Abgabeleitung(en) (16a-16d) ein erstes Sprühuntersystem (101) bilden,
- der zweite Haupttank (17) und der Pumpmechanismus (23) ein zweites Sprühuntersystem (102) bilden,
- die Übertragungsleitung (18) ferner aus mindestens zwei Übertragungsabschnitten (103, 104, 105) gebildet ist, die eingerichtet sind, um sich reversibel zu verbinden und voneinander zu lösen, einer (103) der Übertragungsabschnitte (103, 104, 105), bezeichnet als erster Übertragungsabschnitt, Teil des ersten Sprühuntersystems (101) ist und das erste Ventil (24) umfasst, der andere oder ein anderer (104) der Übertragungsabschnitte (103, 104, 105), bezeichnet als zweiter Übertragungsabschnitt, Teil des zweiten Sprühuntersystems (102) ist und den Pumpmechanismus (23) umfasst.

8. Sprühsystem (10) nach einem der Ansprüche 1 bis 7, wobei der Flüssigkeitskreis (12) umfasst:
- eine zweite Pumpenanordnung (36), die ein erste Pumpe (37) umfasst, die selbst einen Einlass (38) und einen Auslass (39) umfasst, die zweite Pumpe (37) eingerichtet ist, um Flüssigkeit durch den Einlass (38) anzusaugen und um die angesaugte Flüssigkeit durch den Auslass (39) abzugeben,
- mindestens eine zweite Ansaugleitung (40a-40b), die stromabwärts mit dem Einlass (38) der zweiten Pumpe (37) verbunden ist, die oder eine (40a) der zweiten Ansaugleitungen (40a-40b), bezeichnet als zweite Haupttank-Ansaugleitung, den zweiten Haupttank (17) mit dem Einlass (38) der zweiten Pumpe (37) verbindet,
- mindestens eine zweite Abgabeleitung (41a-41e), die stromaufwärts mit dem Auslass (39) der zweiten Pumpe (37) verbunden ist,
das Sprühsystem ferner ein anderes Sprühgestänge und eine andere Übertragungsleitung umfasst, die den ersten Haupttank (13) und den zweiten Haupttank (17) verbindet, mindestens eine der zweiten Abgabeleitungen (41a-41e), bezeichnet als andere Sprühleitung, andere Sprühdüsen umfasst, die auf dem anderen Sprühgestänge angebracht sind und eingerichtet, um Flüssigkeit auf die zu behandelnden Pflanzen zu sprühen, die andere Übertragungsleitung umfasst:
- einen anderen Pumpmechanismus, der eingerichtet ist, um Behandlungsflüssigkeit aus dem ersten Haupttank (13) anzusaugen und um die angesaugte Behandlungsflüssigkeit zum zweiten Haupttank (17) abzugeben, und
- ein anderes erstes Ventil, das stromabwärts von dem anderen Pumpmechanismus angeordnet ist, das andere erste Ventil eingerichtet ist, um:
* in einer ersten Position, den anderen Pumpmechanismus mit dem zweiten Haupttank (17) in Kommunikation zu versetzen, und
* in einer zweiten Position den anderen Pumpmechanismus mit dem Einlass (38) der zweiten Pumpe (37) unter Umgehung des zweiten Haupttanks (17) derart in Kommunikation zu versetzen, dass die zweite Pumpe (37) und die andere(n) Sprühleitung(en) (16a) mit Behandlungsflüssigkeit aus dem zweiten Haupttank (17) oder mit Behandlungsflüssigkeit aus dem ersten Haupttank (13) selektiv versorgt werden.

9. Sprühuntersystem für Sprühsystem (10) nach Anspruch 7, wobei das Sprühuntersystem das erste Sprühuntersystem (101) bildet, der erste Abschnitt (103) imstande ist, sich reversibel mit dem zweiten Abschnitt (105) des zweiten Untersystems (102) zu verbinden.

10. Landmaschine, umfassend ein Sprühsystem (10) nach einem der Ansprüche 1 bis 8.

## Claims

1. Spraying system (10) for agricultural machinery, comprising a spraying boom (11) and a liquid circuit (12) itself comprising:
- a first main tank (13) configured to contain a treatment liquid,
- a first pumping assembly (14) comprising a first pump (19) comprising an inlet (20) and an outlet (21), the first pump (19) being designed to suck up liquid through said inlet (20) and to discharge the sucked up liquid through said outlet (21),
- at least one first suction line (15a-15c) connected, downstream, to the inlet (20) of the first pump (19), the or one (15a) of the first suction lines (15a-15c), called first main tank suction line, connecting the first main tank (13) to the inlet (20) of the first pump (19),
- at least one first discharge line (16a-16d) connected, upstream, to the outlet (21) of the first pump (19), the or one (16a) at least of the first discharge lines (16a-16d), called spraying line, comprising spraying nozzles (22) mounted on the spraying boom (11) and designed to spray liquid onto plants to treat,
- a second main tank (17) configured to contain a treatment liquid,
- a transfer line (18) connecting the first main tank (13) and the second main tank (17) with one another and comprising a pumping mechanism (23) designed to suck up treatment liquid coming from the second main tank (17) and to discharge the sucked up treatment liquid to the first main tank (13),
the transfer line (18) further comprises a first valve (24) installed downstream of the pumping mechanism (23) and designed to:
- in a first position, place in communication the pumping mechanism (23) with the first main tank (13), so as to supply the first pump (19) and the spraying line(s) (16a) with treatment liquid coming from the first and second main tanks (13, 17), via the first main tank (13), and the spraying system (10) being **characterized in that**:
- in a second position, the valve is adapted to place in communication the pumping mechanism (23) with the inlet (20) of the first pump (19), while bypassing the first main tank (13), so as to supply selectively the first pump (19) and the line(s) for spraying (16a) treatment liquid coming from the first main tank (13) or treatment liquid coming from the second main tank (17).

2. Spraying system (10) according to claim 1, wherein one (16b) of the first discharge lines (16a-16d), called incorporation line, connects the outlet (21) of the first pump (19) to the first main tank (13) and comprises an incorporation assembly (26) designed to incorporate a product to incorporate in the liquid discharged by the first pump (19) and flowing along said incorporation line (16b), and a second valve (31) designed to:
- in a first position, place in communication the outlet (21) of the first pump (19), via the incorporation assembly (26), with the first main tank (13), and
- in a second position, place in communication the outlet (21) of the first pump (19), via the incorporation assembly (26), with the transfer line (18), between the pumping mechanism (23) and the first valve (24).

3. Spraying system (10) according to claim 1 or claim 2, wherein:
- the pumping mechanism (23) comprises a Venturi effect device (32) designed to suck up treatment liquid from the second main tank (17) and to discharge said treatment liquid to the first valve (24) by means of an injector (35),
- the liquid circuit (12) comprises:
* a second pumping assembly (36) comprising a second pump (37) itself comprising an inlet (38) and an outlet (39), the second pump (37) being designed to suck up liquid through said inlet (38) and to discharge the sucked up liquid through said outlet (39),
* at least one second suction line (40a, 40b) connected, downstream, to the inlet (38) of the second pump (37), the or one (40a) of the second suction lines (40a, 40b), called second main tank suction line, connecting the second main tank (17) to the inlet (38) of the second pump (37),
* at least one second discharge line (41a-41e) connected, upstream, to the outlet (39) of the second pump (37), the or one (41a) of the second discharge lines (41a-41e), called injection line, connecting the outlet (39) of the second pump (37) to the injector (35) of the Venturi effect device (32) of the pumping mechanism (23), so as to cause, along the transfer line (18), a sucking up and a discharge by the Venturi effect device (32) of treatment liquid coming from the second main tank (17) to the first valve (24).

4. Spraying system (10) according to one of claims 1 to 3, wherein:
- the first pumping assembly (14) is designed to selectively place in communication the or one of the first suction lines (15a-15c) or the transfer line (18), via the first valve (24), with the inlet (20) of the first pump (19) and/or to selectively place in communication the outlet (21) of the first pump (19) with one of the or the first discharge lines (16a-16d); and/or
- the second pumping assembly (36) is designed to selectively place in communication one of the second suction lines (40a, 40b) with the inlet (38) of the second pump (37) and/or to selectively place in communication the outlet (39) of the second pump (37) with one of the or the second discharge lines (41a-41e).

5. Spraying system (10) according to one of claims 1 to 4, comprising an electronic control unit (51), wherein the first main tank (13) comprises a first level detector (52) designed to detect a liquid level in the first main tank (13), the second main tank (17) comprises a second level detector (53) designed to detect a liquid level in the second main tank (17) and the control unit (51) is designed to command the pumping mechanism (23) to suck up and to discharge, along the transfer line (18), treatment liquid coming from the second main tank (17) to the first main tank (13), when the first valve (24) occupies its first position and that a difference between the liquid level detected by the second level detector (53) and the liquid level detected by the first level detector (52) is greater than a predetermined threshold difference.

6. Spraying system (10) according to one of claims 1 to 5, extending along a longitudinal direction oriented from rear to front in a direction of travel of said spraying system (10), and wherein the first main tank (13) is arranged at the rear of the spraying system (10), whereas the second main tank (17) is arranged at the front of the spraying system (10).

7. Spraying system (10) according to one of claims 1 to 6, wherein:
- the first main tank (13), the first pumping assembly (14), the first suction line(s) (15a-15c) and the discharge line(s) (16a-16d) form a first spraying sub-system (101),
- the second main tank (17) and the pumping mechanism (23) form a second spraying sub-system (102),
- the transfer line (18) is further formed of at least two transfer sections (103, 104, 105) designed to connect and disconnect to/from one another reversibly, one (103) of the transfer sections (103, 104, 105), called first transfer section, forming part of the first spraying sub-system (101) and comprising the first valve (24), the other or another (104) of the transfer sections (103, 104, 105), called second transfer section, forming part of the second spraying sub-system (102) and comprising the pumping mechanism (23).

8. Spraying system (10) according to one of claims 1 to 7, wherein the liquid circuit (12) comprises:
- a second pumping assembly (36) comprising a second pump (37) itself comprising an inlet (38) and an outlet (39), the second pump (37) being designed to suck up liquid through said inlet (38) and to discharge the sucked up liquid through said outlet (39),
- at least one second suction line (40a, 40b) connected, downstream, to the inlet (38) of the second pump (37), the or one (40a) of the second suction lines (40a, 40b), called second main tank suction line, connecting the second main tank (17) to the inlet (38) of the second pump (37),
- at least one second discharge line (41a-41e) connected, upstream, to the outlet (39) of the second pump (37),
the spraying system further comprising another spraying boom and another transfer line connecting the first main tank (13) and the second main tank (17), one at least of the second discharge lines (41a-41e), called other spraying line, comprising other spraying nozzles mounted on the other spraying boom and designed to spray liquid onto plants to treat, the other transfer line comprising:
- another pumping mechanism designed to suck up treatment liquid coming from the first main tank (13) and to discharge the sucked up treatment liquid to the second main tank (17), and
- another first valve arranged downstream of the other pumping mechanism, the other first valve being designed to:
* in a first position, place in communication the other pumping mechanism with the second main tank (17), and
* in a second position, place in communication the other pumping mechanism with the inlet (38) of the second pump (37), while bypassing the second main tank (17), so as to supply selectively the second pump (37) and the other line(s) for spraying treatment liquid coming from the second main tank (17) or treatment liquid coming from the first main tank (13).

9. Spraying sub-system for spraying system (10) according to claim 7, said spraying sub-system forming the first spraying sub-system (101), the first section (103) being capable of connecting reversibly to the second section (105) of the second sub-system (102).

10. Agricultural machinery comprising a spraying system (10) according to one of claims 1 to 8.
